# NEUE EUROPÄISCHE PATENTSCHRIFT

(11) **EP 1 337 350 B2**
(45) Veröffentlichungstag und Bekanntmachung des Hinweises auf die Entscheidung über den Einspruch: **19.01.2011**
(45) Hinweis auf die Patenterteilung: 30.08.2006
(21) Anmeldenummer: 01993513.9
(22) Anmeldetag: 08.11.2001
(51) Int. Cl.: B05D 7/00, B05D 3/02, C09D 175/04

(54) **FARB- UND/ODER EFFEKTGEBENDE MEHRSCHICHTLACKIERUNG, VERFAHREN ZU IHRER HERSTELLUNG UND IHRE VERWENDUNG**
COLOUR- AND/OR EFFECT-PRODUCING MULTICOAT LACQUER, METHOD FOR PRODUCTION AND USE THEREOF
VERNIS MULTICOUCHE A COULEUR ET/OU A EFFET, SON PROCEDE DE FABRICATION ET SON UTILISATION

(30) Priorität: 09.11.2000 DE 1055549
(43) Veröffentlichungstag der Anmeldung: 27.08.2003
(73) Patentinhaber: BASF Coatings AG, 48165 Münster (DE)
(72) Erfinder: BAUMGART, Hubert, 48163 Münster (DE); MEISENBURG, Uwe, 47051 Duisburg (DE); CONRING, Uwe, 48249 Dülmen (DE); JOOST, Karl-Heinz, 48317 Drensteinfurt (DE)
(74) Vertreter: Steffan, Gerhard
(86) Internationale Anmeldenummer: PCT/EP2001/012926
(87) Internationale Veröffentlichungsnummer: WO 2002/038287

(56) Entgegenhaltungen:
- EP-A- 0 568 967
- WO-A-95/14721
- WO-A-99/55785
- DE-A- 19 654 296
- DE-A- 19 855 146
- ' Römpp Lexikon Lacke und Druckfarben', 1998, THIEME Artikel 'Autoreparaturlacke, Basislack, Füller', Seiten 50 - 51

## Beschreibung

Die vorliegende Erfindung betrifft eine neue farb- und/oder effektgebende Mehrschichtlackierung. Außerdem betrifft die vorliegende Erfindung ein neues Verfahren zur Herstellung von farb- und/oder effektgebenden Mehrschichtlackierungen. Des weiteren betrifft die vorliegende Erfindung die Verwendung der neuen farb- und/oder effektgebenden Mehrschichtlackierung für die Automobilerstlackierung, die Autoreparaturlackierung, die Lackierung von Möbeln, Türen, Fenstern oder Bauwerken im Innen- und Außenbereich, für die industrielle Lackierung, inklusive Coil Coating, Container Coating und die Beschichtungen oder Imprägnierung elektrotechnischer Bauteile.

Farb- oder farb- und effektgebende Lackierungen von Kraftfahrzeugkarosserien, insbesondere PKW-Karosserien, bestehen heute vorzugsweise aus mehreren Lackschichten, die übereinander appliziert werden und unterschiedliche Eigenschaften aufweisen.

Beispielsweise werden nacheinander eine elektrisch abgeschiedene Elektrotauchlackierung (ETL) als Grundierung, eine Füllerlackierung oder Steinschlagschutzgrundierung, eine Basislackierung und eine Klarlackierung auf ein Substrat aufgebracht. Hierbei dient die ETL insbesondere dem Korossionsschutz des Blechs. Sie wird von der Fachwelt häufig auch als Grundierung bezeichnet. Die Füllerlackierung dient der Abdeckung von Unebenheiten des Untergrundes und gewährt aufgrund ihrer Elastizität die Steinschlagbeständigkeit. Gegebenenfalls kann die Füllerlackierung noch zur Verstärkung des Deckvermögens und zur Vertiefung des Farbtons der Lackierung dienen. Die Basislackierung steuert die Farben und/oder die optischen Effekte bei. Die Klarlackierung dient der Verstärkung der optischen Effekte und dem Schutz der Lackierung vor mechanischer und chemischer Schädigung. Basislackierung und Klarlackierung werden häufig auch zusammenfassend als Decklackierung bezeichnet. Ergänzend wird noch auf Römpp Lexikon Lacke und Druckfarben, Georg Thieme Verlag, Stuttgart, New York, 1998, Seiten 49 und 51, "Automobillacke" verwiesen.

In der Automobilserienlackierung werden dabei besonders hohe Anforderungen an die Qualität der farb- und/oder effektgebenden Mehrschichtlackierung gestellt. Wesentlich für das Erscheinungsbild einer Automobilserienlackierung von hoher Qualität sind
optische Eigenschaften (Appearance) wie
- hoher Glanz,
- hohe Abbildungsunterscheidbarkeit (DOI),
- hohes Deckvermögen,
- keine Unterschied im Farbton in der Fläche und
- prägnante dichroitische optische Effekte,
mechanische Eigenschaften wie
- hohe Härte,
- hohe Kratzfestigkeit,
- hohe Abriebfestigkeit und
- hohe Schlagfestigkeit,
Haftungseigenschaften wie
- sehr gute Zwischenschichthaftung und
- sehr gute Haftung auf dem Substrat
sowie chemische Eigenschaften wie
- sehr gute Witterungsbeständigkeit,
- sehr gute UV- Beständigkeit,
- sehr gute Beständigkeit gegenüber dem Weißanlaufen,
- sehr gute Etch-Beständigkeit und
- sehr gute Beständigkeit gegen Chemikalien (insbesondere Säuren und Basen), Lösemittel, Baumharz, Vogelkot und Benzin
(vgl. hierzu auch das europäische Patent EP 0 352 298 B1).

Die bekannten farb- und/oder effektgebenden Mehrschichtlackierungen werden hergestellt, indem man auf ein grundiertes oder ungrundiertes Substrat eine Füllerschicht appliziert und bei Temperaturen von 130 bis 180°C einbrennt (vgl. die Patentanmeldungen DE 40 05 961 A1, WO 95/12626 oder EP 0 788 523). Auf die resultierende Füllerlackierung wird eine Basislackschicht appliziert und, ohne sie zu härten, getrocknet. Die getrocknete Basislackschicht wird mit einer Klarlackschicht überschichtet, wonach die beiden Schichten gemeinsam gehärtet werden (Naß-in-naß-Verfahren). Üblicherweise werden auch hierbei Temperaturen von 130 bis 180°C angewandt (vgl. beispielsweise die europäischen Patente EP 0 730 517 B1 oder EP 0 730 613 B1).

Obwohl dieses Verfahren hervorragende farb- und/oder effektgebende Mehrschichtlackierungen liefert, weist es den Nachteil auf, daß es aufgrund der angewandten hohe Temperaturen energieintensiv und daher vergleichsweise teuer ist.

Aus den deutschen Patentanmeldungen DE 198 45 740 A1 oder DE 198 46 971 A1 sind Zweikomponentenklarlacke bekannt, die auch als Zweikomponentenfüller verwendet werden können. Diese Zweikomponentensysteme können bei niedrigeren Temperaturen gehärtet werden. Sie werden aber in erster Linie für die Beschichtung von Kunststoffen verwendet.

Es ist nicht bekannt, ob sie im Rahmen von hochqualitativen Automobilerstlackierungen verwendet werden können.

Aus der deutschen Patentanmeldung DE 199 04 170 A1 sind Wasserbasislacke für die Beschichtung von Kunststoffen bekannt. Die Wasserbasislacke können bei niedrigen Temperaturen gehärtet werden. Auch hier ist nicht bekannt, ob sie für die Herstellung von hochqualitativen Automobilerstlackierungen verwendet werden können.

Es ist auch bekannt, im Rahmen der Autoreparaturlackierung Basislacke mit Mehrkomponentenklarlacken zu überschichten und bei vergleichsweise niedrigen Temperaturen gemeinsam zu härten (vgl. das europäische Patent EP 0 730 613 B1). Will man aber Mehrschichtlackierungen in Automobilserienqualität erhalten, muß man doch wieder Temperaturen über 130°C anwenden.

Dies gilt auch für die aus der deutschen Patentanmeldung DE 198 55 146 A1 bekannten thermisch und mit aktinischer Strahlung härtbaren Mehrkomponentenklarlacke. Diese können zwar für sich selbst gesehen bei niedrigen Temperaturen gehärtet werden, indes werden sie bei der Herstellung von Mehrschichtlackierungen gemeinsam mit der Basislackschicht bei einer Temperaturen von 140°C thermisch gehärtet, um eine Mehrschichtlackierung in Automobilserienqualität zu erhalten.

Aufgabe der vorliegenden Erfindung ist es, neue farb- und/oder effektgebende Mehrschichtlackierungen in Automobilserienqualität bereitzustellen, bei deren Herstellung weniger Energie verbraucht werden muß, die aber dasselbe vorteilhafte Eigenschaftsprofil wie die bekannten farb- und/oder effektgebenden Mehrschichtlackierungen aufweisen, wenn nicht gar dieses übertreffen. Außerdem war es die Aufgabe der vorliegenden Erfindung, ein neues Verfahren zur Herstellung farb- und/oder effektgebender Mehrschichtlackierungen bereitzustellen, bei dem weniger Energie als bei den bisher bekannten Verfahren verbraucht wird und das dennoch keine wesentlichen Veränderungen von vorhandenen Lackieranlagen in der Linie erfordert.

Demgemäß wurde die neue farb- und/oder effektgebende Mehrschichtlackierung mit der Qualität einer Automobilserienlackierung gefunden, die herstellbar ist, indem man
1. mindestens einen bei einer Temperatur < 120°C thermisch oder bei einer Temperatur < 120°C thermisch und mit aktinischer Strahlung härtbaren Füller auf ein grundiertes oder ungrundiertes Substrat appliziert und die resultierenden Naßschicht,
   1.1 ohne sie vollständig zu härten, trocknet, wodurch eine Füllerschicht resultiert, oder
   1.2 bei einer Temperatur < 120°C thermisch oder bei einer Temperatur < 120°C thermisch und mit aktinischer Strahlung härtet, wodurch eine Füllerlackierung resultiert,
2. mindestens einen bei einer Temperatur < 120°C thermisch härtbaren oder bei einer Temperatur < 120°C thermisch und mit aktinischer Strahlung härtbaren Basislack auf die Füllerschicht (1.1) oder die Füllerlackierung (1.2) appliziert und die resultierenden Naßschicht,
   2.1 ohne sie vollständig zu härten, trocknet, wodurch eine Basislackschicht resultiert, oder
   2.2 für sich alleine oder gemeinsam mit der Füllerschicht (1.1) bei einer Temperatur <120°C thermisch oder bei einer Temperatur < 120°C thermisch und mit aktinischer Strahlung härtet, wodurch eine farb- und/oder effektgebende Basislackierung resultiert,
3. mindestens einen mit aktinischer Strahlung sowie bei einer Temperatur von <120°C thermisch härtbaren Mehrkomponentenklarlack auf die Basislackschicht (2.1) oder die Basislackierung (2.2) appliziert und die resultierende Naßschicht
   3.1 für sich alleine,
   3.2 gemeinsam mit der Basislackschicht (2.1) oder
   3.3 gemeinsam mit der Basislackschicht (2.1) und der Füllerschicht (1.1)
mit aktinischer Strahlung sowie bei einer Temperatur <120°C thermisch härtet, wodurch die Mehrschichtlackierung resultiert, wobei die thermisch und mit aktinischer Strahlung härtbaren Mehrkomponentenklarlacke mindestens
(A) eine Komponente, enthaltend
   (A1) mindestens einen Bestandteil mit mindestens zwei isocyanatreaktiven funktionellen Gruppen und
   (A2) mindestens einen Bestandteil mit mindestens einer funktionellen Gruppe, die mindestens eine mit aktinischer Strahlung aktivierbare Bindung enthält,
(B) eine Komponente, enthaltend
   (B2) mindestens eine Verbindung mit mindestens einer Isocyanatgruppe und mindestens einer funktionellen Gruppe, die mindestens eine mit aktinischer Strahlung aktivierbare Bindung enthält;
enthalten.

Im folgenden wird die neue farb- und/oder effektgebende Mehrschichtlackierung mit der Qualität einer Automobilserienlackierung als "erfindungsgemäße Lackierung" bezeichnet.

Außerdem wurde das neue Verfahren zur Herstellung einer farb- und/oder effektgebendn Mehrschichtlackierung mit der Qualität einer Automobilserienlackierung durch Applikation mindestens einer Füllerlackierung, mindestens einer Basislackierung und mindestens einer Klarlackierug auf ein grundiertes oder undgrundiertes Substrat und Härtung der resultierenden Naßschichten gefunden, bei dem man
1. mindestens einen bei einer Temperatur < 120°C thermisch oder bei einer Temperatur < 120°C thermisch und mit aktinischer Strahlung härtbaren Füller auf ein grundiertes oder ungrundiertes Substrat appliziert und die resultierenden Naßschicht,
   1.1 ohne sie vollständig zu härten, trocknet, wodurch eine Füllerschicht resultiert, oder
   1.2 bei einer Temperatur < 120°C thermisch oder bei einer Temperatur < 120°C thermisch und mit aktinischer Strahlung härtet, wodurch eine Füllerlackierung resultiert,
2. mindestens einen bei einer Temperatur < 120°C thermisch härtbaren oder bei einer Temperatur < 120°C thermisch und mit aktinischer Strahlung härtbaren Basislack auf die Füllerschicht (1.1) oder die Füllerlackierung (1.2) appliziert und die resultierenden Naßschicht,
   2.1 ohne sie vollständig zu härten, trocknet, wodurch eine Basislackschicht resultiert, oder
   2.2 für sich alleine oder gemeinsam mit der Füllerschicht (1.1) bei einer Temperatur < 120°C thermisch oder bei einer Temperatur < 120°C thermisch und mit aktinischer Strahlung härtet, wodurch eine farb- und/oder effektgebende Basislackierung resultiert,
3. mindestens einen mit aktinischer Strahlung und bei einer Temperatur von <120°C thermisch härtbaren Mehrkomponentenklarlack auf die Basislackschicht (2.1) oder die Basislackierung (2.2) appliziert und die resultierende Naßschicht
   3.1 für sich alleine,
   3.2 gemeinsam mit der Basislackschicht (2.1) oder
   3.3 gemeinsam mit der Basislackschicht (2.1) und der Füllerschicht (1.1)
mit aktinischer Strahlung sowie bei einer Temperatur <120°C thermisch härtet, wodurch die Klarlackierung, die Klarlackierung und die Basislackierung oder die Klarlackierung, die Basislackierung und die Füllerlackierung resultiert oder resultieren, wobei die thermisch und mit aktinischer Strahlung härtbaren Mehrkomponentenklarlacke mindestens
(A) eine Komponente, enthaltend
   (A1) mindestens einen Bestandteil mit mindestens zwei isocyanatreaktiven funktionellen Gruppen und
   (A2) mindestens einen Bestandteil mit mindestens einer funktionellen Gruppe, die mindestens eine mit aktinischer Strahlung aktivierbare Bindung enthält,
(B) eine Komponente, enthaltend
   (B2) mindestens eine Verbindung mit mindestens einer Isocyanatgruppe und mindestens einer funktionellen Gruppe, die mindestens eine mit aktinischer Strahlung aktivierbare Bindung enthält;
enthalten.

Im folgenden wird neue Verfahren zur Herstellung einer farb- und/oder effektgebenden Mehrschichtlackierung mit der Qualität einer Automobilserienlackierung durch Applikation mindestens einer Füllerlackierung, mindestens einer Basislackierung und mindestens einer Klarlackierug auf ein grundiertes oder undgrundiertes Substrat und Härtung der resultierenden Naßschichten als "erfindungs gemäßes Verfahren" bezeichnet.

Weitere erfindungsgemäße Gegenstände ergeben sich aus der Beschreibung.

Das erfindungsgemäße Verfahren und die erfindungsgemäßen Mehrschichtlackierungen dienen der Beschichtung von grundierten oder ungrundierten Substraten.

Als Substrate kommen alle zu lackierenden Oberflächen, die durch eine Härtung der hierauf befindlichen Schichten unter der kombinierten Anwendung von Hitze und aktinischer Strahlung (Dual-Cure) nicht geschädigt werden, in Betracht.

Geeignete Subtrate bestehen aus Metallen, Kunststoffen, Holz, Keramik, Stein, Textil, Faserverbunden, Leder, Glas, Glasfasern, Glas- und Steinwolle, mineral-und harzgebundenen Baustoffen, wie Gips- und Zementplatten oder Dachziegel, sowie Verbunden dieser Materialien.

Demnach sind die erfindungsgemäßen Mehrschichtlackierungen und das erfindungsgemäße Verfahren grundsätzlich auch für Anwendungen außerhalb der Automobilerstlackierung geeignet. Hierbei kommen sie insbesondere für die Autoreparaturlackierung für die Lackierung von Möbeln, Fenstern und Türen, von Bauwerken im Innen- und Außenbereich und für die industrielle Lackierung, inklusive Coil Coating, Container Coating und die Imprägnierung oder Beschichtung elektrotechnischer Bauteile, in Betracht. Im Rahmen der industriellen Lackierung eignen sie sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Im Falle elektrisch leitfähiger Substrate können Grundierungen verwendet werden, die in üblicher und bekannter Weise aus Elektrotauchlacken hergestellt werden. Hierfür kommen sowohl anodische als auch kathodische Elektrotauchlacke, insbesondere aber kathodische, in Betracht.

Es können auch grundierte oder ungrundierte Kunststoffteile aus z. B. ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Grundierung versehen werden.

Die Applikation der Beschichtungsstoffe kann im Rahmen des erfindungsgemäßen Verfahrens durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air- Heißspritzen. Die Applikationen kann bei Temperaturen von max. 70 bis 80°C durchgeführt werden, so daß geeignete Applikationsviskositäten erreicht werden, ohne daß bei der kurzzeitig einwirkenden thermischen Belastung eine Veränderung oder Schädigungen des Beschichtungsstoffs und seines gegebenenfalls wiederaufzubereitenden Overspray eintreten. So kann das Heißspritzen so ausgestaltet sein, daß der Beschichtungsstoff nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem jeweils applizierten Beschichtungsstoff selbst, betrieben wird.

Ist der jeweils applizierte Beschichtungsstoff thermisch und mit aktinischer Strahlung härtbar, wird die Applikation bevorzugt bei Beleuchtung mit sichtbarem Licht einer Wellenlänge von über 550 nm oder unter Lichtausschluß durchgeführt. Hierdurch werden eine stoffliche Änderung oder Schädigung des Dual-Cure-Beschichtungsstoffs und des Overspray vermieden.

Im allgmeinen werden die Füllerlackschicht, Basislackschicht und Klarlackschicht in einer Naßschichtdicke appliziert, daß nach ihrer Aushärtung Schichten mit der für ihre Funktionen notwendigen und vorteilhaften Schichtdicken resultieren. Im Falle der Füllerlackierung liegt diese Schichtdicke bei 10 bis 150, vorzugsweise 15 bis 120, besonders bevorzugt 20 bis 100 und insbesondere 25 bis 90 µm, im Falle der Basislackierung liegt sie bei 5 bis 50, vorzugsweise 6 bis 40, besonders bevorzugt 7 bis 30 und insbesondere 8 bis 25 µm, und im Falle der Klarlackierungen liegt sie bei 10 bis 100, vorzugsweise 15 bis 80, besonders bevorzugt 20 bis 70 und insbesondere 25 bis 60 µm.

Die Aushärtung kann nach einer gewissen Ruhezeit erfolgen. Sie kann eine Dauer von 30 s bis 2 h, vorzugsweise 1 min bis 1 h und insbesondere 1 min bis 30 min haben. Die Ruhezeit dient beispielsweise zum Verlauf und zur Entgasung der applizierten Schichten oder zum Verdunsten von flüchtigen Bestandteilen wie Lösemittel oder Wasser. Die Ruhezeit kann durch die Anwendung erhöhter Temperaturen bis 80°C unterstützt und/oder verkürzt werden, sofern hierbei keine Schädigungen oder Veränderungen der applizierten Schichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Die Härtung kann auch stufenweise durchgeführt werden. Sie erfolgt erfindungsgemäß bei Temperaturen < 120°C, vorzugsweise < 110°C und insbesondere < 100°C, vorzugsweise während einer Zeit von 1 min bis zu 2 h, besonders bevorzugt 2 min bis zu 1 h und insbesondere 3 min bis 30 min.

Auch die Härtung mit aktinischer Strahlung weist keine methodischen Besonderheiten auf, sondern erfolgt mit Hilfe von elektromagnetischer Strahlung wie nahes Infrarot, sichtbares Licht, UV-Strahlung oder Röntgenstrahlung, insbesondere UV-Strahlung, und/oder Korpuskularstrahlung wie Elektronenstrahlung. Vorzugsweise wird UV-Strahlung angewandt.

Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der applizierten Schichten gewährleistet werden. Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Quecksilberhoch- oder -niederdruckdampflampen, welche gegebenenfalls mit Blei dotiert sind, um ein Strahlenfenster bis zu 405 nm zu öffnen, oder Elektronenstrahlquellen. Weitere Beispiele geeigneter Strahlenquellen werden in der deutschen Patentanmeldung DE 198 18 735 A1, Spalte 10, Zeilen 31 bis 61, beschrieben. Deren Anordnung ist im Prinzip bekannt und kann den Gegebenheiten des Werkstücks und der Verfahrensparameter angepaßt werden. Bei kompliziert geformten Werkstücken wie Automobilkarosserien können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern, verbunden mit einer automatischen Bewegungseinrichtung für das Bestrahlen von Hohlräumen oder Kanten, ausgehärtet werden.

Die Anlagen und Bedingungen dieser Härtungsmethoden werden beispielsweise auch in R. Holmes, U.V. and E.B. Curing Formulations for Printing Inks, Coatings and Paints, SITA Technology, Academic Press, London, United Kindom, 1984, beschrieben.

Hierbei kann die Härtung stufenweise erfolgen, d. h. durch mehrfache Belichtung oder Bestrahlung mit aktinischer Strahlung. Dies kann auch alternierend erfolgen, d. h., daß beispielsweise abwechselnd mit UV-Strahlung und Elektronenstrahlung gehärtet wird.

Thermische Härtung und Härtung mit aktinischer Strahlung können gleichzeitig oder alternierend eingesetzt werden. Werden die beiden Härtungsmethoden alternierend verwendet, kann beispielsweise mit der Härtung mit aktinischer Strahlung begonnen und mit der thermischen Härtung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für den jeweiligen Einzelfall am vorteilhaftesten ist aufgrund seines allgemeinen Fachwissens gegebenenfalls unter Zuhilfenahme einfacher Vorversuche ermitteln.

Für die Herstellung der erfindungsgemäßen Mehrschichtlackierungen nach dem erfindungsgemäßen Verfahren kommen grundsätzlich alle Füller, Basislacke und Klarlacke in der Form von Pulverslurries, 100%-Systemen oder wäßrigen oder konventionellen flüssigen Lacken, insbesondere in der Form von wäßrigen oder konventionellen flüssigen Lacken, in Betracht, sofern sie sich wie vorstehend beschrieben, applizieren und härten lassen.

Die Füller und Basislacke, die für das erfindungsgemäße Verfahren gut geeignet sind, enthalten übliche und bekannte färb- und/oder effektgebende, elektrisch leitfähige oder magnetisch abschirmende Pigmente, lösliche Farbstoffe und/oder Füllstoffe.

Beispiele geeigneter Effektpigmente sind Metallplättchenpigmente wie handelsübliche Aluminiumbronzen, gemäß DE 36 36 183 A1 chromatierte Aluminiumbronzen, und handelsübliche Edelstahlbronzen sowie nichtmetallische Effektpigmente, wie zum Beispiel Perlglanz-bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A1, DE, 37 18 446 A1, DE 37 19 804 A1, DE 39 30 601 A1, EP 0 068 311 A1, EP 0 264 843 A1, EP 0 265 820 A1, EP 0 283 852 A1, EP 0 293 746 A1, EP 0 417 567 A1, US 4,828,826 A oder US 5,244,649 A verwiesen.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten - 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 » Titandioxid-Pigmente «, Seiten 400 und 467, »Natürlich vorkommende Pigmente«, Seite 459 »Polycyclische Pigmente«, Seite 52, »AzomethinPigmente«, »Azopigmente«, und Seite 379, »Metallkomplex-Pigmente«, verwiesen.

Beispiele für fluoreszierende Pigmente (Tagesleuchtpigmente) sind Bis(azomethin)-Pigmente.

Beispiele für geeignete elektrisch leitfähige Pigmente sind Titandioxid/Zinnoxid-Pigmente.

Beispiele für geeignete magnetisch abschirmende Pigmente sind Pigmente auf der Basis von Eisenoxiden oder Chromdioxid.

Geeignete lösliche organische Farbstoffe sind lichtechte organische Farbstoffe mit einer geringen oder nicht vorhandenen Neigung zur Migration aus den Füllern und den Basislacken und den hieraus hergestellten Beschichtungen. Die Migrationsneigung kann der Fachmann anhand seines allgemeinen Fachwissens abschätzen und/oder mit Hilfe einfacher orientierender Vorversuche beispielsweise im Rahmen von Tönversuchen ermitteln.

Beispiele geeigneter organischer und anorganischer Füllstoffe sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Poylamid oder Polyacrylnitril. Ergänzend wird auf Römpp Lexikon Lacke und Druckfarben, Georg Thieme Verlag, 1998, Seiten 250 ff., »Füllstoffe«, verwiesen.

Es ist von Vorteil, Gemische von plättchenförmigen anorganischen Füllstoffen wie Talk oder Glimmer und nichtplättchenförmigen anorganischen Füllstoffen wie Kreide, Dolomit Calciumsulfate, oder Bariumsulfat zu verwenden, weil hierdurch die Viskosität und das Fließverhalten sehr gut eingestellt werden können.

Die vorstehend beschriebenen Pigmente, Farbstoffe und Füllstoffe können in feinverteilter, nicht deckender Form auch in den Klarlacken vorliegen.

Zusatzstoffe wie Nanopartikel, thermisch oder mit aktinischer Strahlung härtbare Reaktiverdünner, niedrig siedende organische Lösemittel und hochsiedende organische Lösemittel ("lange Lösemittel"), Wasser, UV-Absorber, Lichtschutzmittel, Radikalfänger, thermolabile radikalische Initiatoren, Photoinitiatoren und -Coinitiatoren, Vernetzungsmittel, Katalysatoren für die thermische Vernetzung, Entlüftungsmittel, Slipadditive, Polymerisationsinhibitoren, Entschäumer, Emulgatoren, Netz- und Dispergiermittel, Haftvermittler, Verlaufmittel, filmbildende Hilfsmittel, Sag control agents (SCA), rheologiesteuernde Additive (Verdicker), Flammschutzmittel, Sikkative, Trockungsmittel, Hautverhinderungsmittel, Korrosionsinhibitoren, Wachse, Mattierungsmittel und/oder Vorstufen organisch modifizierter Keramikmaterialien können sowohl in den Füllern und Basislacken als auch in den Klarlacken enthalten sein.

Geeignete Nanopartikel sind insbesondere solche auf der Basis von Siliziumdioxid, Aluminiumoxid und Zirkoniumoxid mit einer Teilchengröße < 50 nm, die keinen Mattierungseffekt haben. Beispiele geeigneter Nanopartikel auf der Basis von Siliziumdioxid sind pyrogene Siliziumdioxide, welche unter dem Handelsnamen Aerosil® VP8200, VP721 oder R972 von der Firma Degussa oder den Handelsnamen Cab O Sil® TS 610, CT 1110F oder CT 1110G von der Firma CABOT vertrieben werden. Im allgemeinen werden diese Nanopartikel in der Form von Dispersionen in mit aktinischer Strahlung härtbaren Monomeren, wie den nachstehend beschriebenen Reaktiwerdünnern, vertrieben. Beispiele geeigneter Monomere, welche für den vorliegenden Verwendungszweck besonders gut geeignet sind, sind alkoxyliertes Pentaerythrit-tetra- oder - triacrylat, Ditrimethylolpropan-tetra- oder-triacrylat, Dineopentylglykoldiacrylat, Trimethylolpropantriacrylat, Trishydroxyethylisocyanurattriacrylat, Dipentaerythritpenta- oder- hexaacrylat oder Hexandioldiacrylat. Im allgemeinen enthalten diese Dispersionen die Nanopartikel in einer Menge von, jeweils bezogen auf die Dispersionen, 10 bis 80 Gew.-%, vorzugsweise 15 bis 70 Gew.-%, besonders bevorzugt 20 bis 60 Gew.-% und insbesondere 25 bis 50 Gew.-%. Ein Beispiel für eine erfindungsgemäß besonders gut geeignete Dispersion von Nanopartikeln ist die Dispersion, welche unter dem Handelsnamen High Link® OG 103-31 von der Firma Clariant Hoechst vertrieben wird.

Diese Dispersionen von Nanopartikeln werden vorzugsweise in den erfindungsgemäß zu verwendenden Klarlacken eingesetzt, weil hierdurch in den Klarlacken ein Festkörpergehalt von bis zu 100% eingestellt werden kann und die betreffenden Klarlacke besonders kratzfeste Klarlackierungen liefern.

Beispiele geeigneter thermisch härtbarer Reaktiverdünner sind stellungsisomere Diethyloctandiole oder Hydroxylgruppen enthaltende hyperverzweigte Verbindungen oder Dendrimere, wie sie beispielsweise in den deutschen Patentanmeldungen DE 198 05 421 A1, DE 198 09 643 A1 oder DE 198 40 405 A1 beschrieben werden.

Beispiele geeigneter mit aktinischer Strahlung härtbarer Reaktiverdünner sind die in Römpp Lexikon Lacke und Druckfarben, Georg Thieme Verlag, Stuttgart, New York, 1998, auf Seite 491 unter dem Stichwort, »Reaktivverdünner«, oder in der Spalte 7, Zeilen 1 bis 26, der DE 198 18 715 A1 beschriebenenen oder Reaktiverdünner mit mindestens 5, insbesondere 5, mit aktinischer Strahlung aktivierbaren Bindungen im Molekül wie beispielsweise Dipentaerythritolpentaacrylat.

Beispiele geeigneter niedrigsiedender organischer Lösemittel und hochsiedender organischer Lösemittel ("lange Lösemittel") sind Ketone wie Methylethlyketon, Methylisoamylketon oder Methylisobutylketon, Ester wie Ethylacetat, Butylacetat, Ethylethoxypropionat, Methoxypropylacetat oder Butylglykolacetat, Ether wie Dibutylether oder Ethylenglykol-, Diethylenglykol-, Propylenglykol-, Dipropylenglykol-, Butylenglykol- oder Dibutylenglykoldimethyl-, -diethyl- oder -dibutylether, N-Methylpyrrolidon oder Xylole oder Gemische aromatischer und/oder aliphatischer Kohlenwasserstoffe wie Solventnaphtha®, Benzin 135/180, Dipentene oder Solvesso®.

Beispiele geeigneter thermolabiler radikalischer Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether.

Beispiele geeigneter Katalysatoren für die Vernetzung sind Dibutylzinndilaurat, Dibutylzinndioleat, Lithiumdecanoat, Zinkoctoat oder Bismutsalze wie Bismutlactat oder -dimethylolpropionat.

Beispiele geeigneter Photoinitiatoren und Coinitiatoren werden in Römpp Lexikon Lacke und Druckfarben, Georg Thieme Verlag Stuttgart, 1998, Seiten 444 bis 446, beschrieben.

Beispiele geeigneter Vernetzungsmittel, wie sie in Mehrkomponentensystem verwendet werden, sind Polyisocyanate mit im statistischen Mitteln mindestens 2,0, bevorzugt mehr als 2,0 und insbesondere mehr als 3,0 Isocyanatgruppen pro Molekül wie
- Diisocyanate wie Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan, Dicyclohexylmethan-2,4'-diisocyanat, Trimethylendiisocyanat, Tetramethylendiisocyanat, Pentamethylendiisocyanat, Hexamethylendiisocyanat (HDI), Ethylethylendiisocyanat, Trimethylhexandiisocyanat, Heptamethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan,1,2-,1,4-oder 1,3-Bis(2-isocyanatoeth-1-yl)cyclohexan, 1,3-Bis(3-isocyanatoprop-1-yl)cyclohexan, 1,2-, 1,4-oder 1,3-Bis(4-isocyanatobut-1-yl)cyclohexan oder flüssiges Bis(4-isocyanatocyclohexyl)methan eines trans/trans-Gehalts von bis zu 30 Gew.-%, vorzugsweise 25 Gew.-% und insbesondere 20 Gew.-%, wie es in den Patentanmeldungen DE 44 14 032 A1, GB 1220717 A1, DE 16 18 795 A1 oder DE 17 93 785 A1 beschrieben wird, bevorzugt Isophorondi-isocyanat, 5-Isocyanato-1-(2-isocyanatoeth-1-yl)-1,3,3-trimethylcyclohexan, 5-Isocyanato-1-(3-isocyanatoprop-1-yl)-1,3,3-trimethylcyclohexan, 5-Isocyanato-(4-isocyanatobut-1-yl)-1,3,3-trimethylcyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan oder HDI, insbesondere HDI; oder
- Isocyanurat-, Biuret-, Allophanat-, Iminooxadiazindion-, Urethan-, Harnstoff- Carbodiimid und/oder Uretdiongruppen aufweisende Polyisocyanate, die in üblicher und bekannter Weise aus den vorstehend beschriebenen Diisocyanaten hergestellt werden; Beispiele geeigneter Herstellungsverfahren und Polyisocyanate sind beispielsweise aus den Patentschriften CA 2,163,591 A, US 4,419,513 A, US 4,454,317 A, EP 0 646 608 A, US 4,801,675 A, EP 0 183 976 A1, DE 40 15 155 A1, EP 0 303 150 A1, EP 0 496 208 A1, EP 0 524 500 A1, EP 0 566 037 A1, US 5,258,482 A, US 5,290,902 A, EP 0 649 806 A1, DE 42 29 183 A1 oder EP 0 531 820 A1 bekannt.

Beispiele geeigneter Vernetzungsmittel, wie sie in Einkomponentensystemem verwendet werden, sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised-edition, Edit. D. Stoye und W. Freitag, Wiley-VCH, Weinheim, New York, 1998, Seiten 80 ff., den Patentschriften US 4 710 542 A oder EP 0 245 700 A1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden, Carboxylgruppen enthaltende Verbindungen oder Harze, wie sie beispielsweise in der Patentschrift DE 196 52 813 A1 beschrieben werden, Epoxidgruppen enthaltende Verbindungen oder Harze, wie sie beispielsweise in den Patentschriften EP 0 299 420 A1, DE 22 14 650 B1, DE 27 49 576 B1, US 4,091,048 A oder US 3,781,379 A beschrieben werden, blockierte Polyisocyanate, wie sie beispielsweise in den Patentschriften US 4,444,954 A, DE 196 17 086 A1, DE 196 31 269 A1, EP 0 004 571 A1 oder EP 0 582 051 A1 beschrieben werden, und/oder Tris(alkoxycarbonylamino)-triazine, wie sie in den Patentschriften US 4,939,213 A , US 5,084,541 A, US 5,288,865 A oder EP 0 604 922 A1 beschrieben werden.

Beispiele für geeignete Entlüftunsmittel sind Diazadicycloundecan oder Benzoin.

Beispiele geeigneter Emulgatoren sind nicht ionische Emulgatoren, wie alkoxylierte Alkanole, Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen, Polyolen, Phenolen und Alkylphenolen.

Beispiele geeigneter Netzmittel sind Siloxane, fluorhaltige Verbindungen, Carbonsäurehalbester, Phosphorsäureester, Polyacrylsäuren und deren Copolymere oder Polyurethane.

Ein Beispiel für einen geeigneten Haftvermittler ist Tricyclodecandimethanol.

Beispiele für geeignete filmbildende Hilfsmittel sind Cellulose-Derivate wie Celluloseacetobutyrat (CAB).

Beispiele geeigneter Sag control agents sind Harnstoffe, modifizierte Harnstoffe und/oder Kieselsäuren, wie sie beispielsweise in den Literaturstellen EP 0 192 304 A1, DE 23 59 923 A1, DE 18 05 693 A1, WO 94/22968, DE 27 51 761 C1, WO 97/12945 oder "farbe + lack", 11/1992, Seiten 829 ff., beschrieben werden.

Beispiele geeigneter rheologiesteuernder Additive (Verdicker) sind die aus den Patentanmeldungen WO 94/22968, EP 0 276 501 A1, EP 0 249 201 A1 oder WO 97/12945 bekannten; vernetzte polymere Mikroteilchen, wie sie beispielsweise in der EP 0 008 127 A1 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder Polyacrylate; oder assoziative Verdickungsmittel auf Polyurethanbasis, wie sie in Römpp Lexikon Lacke und Druckfarben, Georg Thieme Verlag, Stuttgart, New York, 1998, »Verdickungsmittel«, Seiten 599 bis 600, und in dem Lehrbuch »Lackadditive« von Johan Bieleman, Wiley-VCH, Weinheim, New York, 1998, Seiten 51 bis 59 und 65, beschrieben werden; insbesondere Kombinationen von ionischen und nicht ionischen Verdickern, wie sie in der Patentanmeldung DE 198 41 842 A1 zu Einstellung eines strukturviskosen Verhaltens beschrieben werden; oder die Kombination von assoziativen Verdickern auf Polyurethanbasis und Netzmitteln auf Polyurethanbasis, wie sie in der deutschen Patentanmeldung DE 198 35 296 A1 im Detail beschrieben wird.

Ein Beispiel für ein geeignetes Mattierungsmittel ist Magnesiumstearat.

Beispiele geeigneter Vorstufen für organisch modifizierte Keramikmaterialien sind hydrolysierbare metallorganische Verbindungen insbesondere von Silizium und Aluminium.

Weitere Beispiele für die vorstehend aufgeführten Zusatzstoffe sowie Beispiele geeigneter UV-Absorber, Radikalfähger, Verlaufmittel, Flammschutzmittel, Sikkative, Trocknungsmittel, Hautverhinderungsmittel, Korrosionsinhibitoren und Wachse (B) werden in dem Lehrbuch »Lackadditive« von Johan Bieleman, Wiley-VCH, Weinheim, New York, 1998, im Detail beschrieben.

Erfindungsgemäß wird bei der Herstellung der erfindungsgemäßen Mehrschichtlackierung in einem ersten Verfahrenschritt mindestens ein, insbesondere ein, Füller auf das grundierte oder ungrundierte Substrat appliziert.

Hierbei kommen alle wäßrigen oder nicht wäßrigen Füller in Betracht, die sich mit Hilfe der vorstehend beschriebenen Verfahren unter den vorstehend beschriebenen Bedingungen applizieren und härten lassen.

In einer ersten bevorzugten Ausführungsform werden thermisch härtbare Füller auf der Basis von wäßrigen Polyurethandispersionen verwendet.

Beispiele geeigneter thermisch härtbarer Füller auf der Basis von wäßrigen Polyurethandispersionen werden in der deutschen Patentanmeldung DE 40 05 961 A1 beschrieben.

Diese enthalten als Bindemittel eine Kombination aus
- 40 bis 70 Gew.-% eines wasserverdünnbaren Polyurethanharzes,
- 15 bis 40 Gew.-% eines wasserverdünnbaren Polyesterharzes und
- 8 bis 35 Gew.-% eines Aminoplastharzes,
wobei die Gewichtsprozentangaben auf die Gesamtmenge der drei Bestandteile bezogen sind.

Das Polyurethanharz weist eine Säurezahl von 10 bis 60 mg KOH/g und ein zahlenmittleres Molekulargewicht von 4.000 bis 25.000 auf. Es ist herstellbar, indem
- ein Polyester- und/oder Polyesterpolyol mit einem zahlenmittleren Molekulargewicht von 400 bis 5.000 oder ein Gemisch aus solchen Polyester- und/oder Polyetherpolyolen,
- ein Polyisocyanat oder ein Gemisch aus Polyisocyanaten;
- eine Verbindung, die mindestens eine gegen Isocyanatgruppen reaktive und mindestens eine zur Anionen Bildung befähigte Gruppe im Molekül aufweist, oder ein Gemisch aus solchen Verbindungen und gegebenenfalls
- eine Hydroxyl- und/oder Aminogruppen enthaltende organische Verbindung mit einem Molekulargewicht von 40 bis 400 oder ein Gemisch aus solchen Verbindungen
miteinander umgesetzt werden und das entstandene Reaktionsprodukt partiell oder vollständig neutralisiert wird.

Das wasserverdünnbare Polyesterharz weist eine Säurezahl von 20 bis 100 mg KOH/g und eine Hydroxylzahl von 40 bis 150 mg KOH/g auf und ist herstellbar, indem
(i) eine organische Verbindung mit mindestens drei funktionellen Gruppen, wobei mindestens eine der funktionellen Gruppen eine Carboxylgruppe sein muß und übrigen funktionellen Gruppen Hydroxyl- und/oder Amino-und/oder Carboxyl- und/oder Säureanhydridgruppen sein können, wobei für eine Säureanhydridgruppe 2 funktionelle Gruppen gezählt werden, oder Gemische aus solchen organischen Verbindungen,
(ii) eine cyclische Dicarbonsäure oder ein Gemisch aus cyclischen Dicarbonsäuren,
(iii) gegebenenfalls eine aliphatische Dicarbonsäure oder ein Gemisch aus aliphatischen Dicarbonsäuren,
(iv) ein Polyol, bei dem mindestens ein alpha-Kohlenstoffatom ein sekundäres oder tertiäres Kohlenstoffatom oder ein Glied in einem kohlenstoffhaltigen Ringsystem ist, oder ein Gemisch aus solchen Polyolen und
(v) gegebenenfalls ein von (iv) verschiedenes Polyol oder ein Gemisch aus solchen Polyolen
miteinander umgesetzt werden. Dabei werden die Carbonsäurekomponente [(i) + (ii) + (iii)] und die Polyolkomponente [(iv) + (v)] in einem molaren Verhältnis von 3: 4 bis 7: 8 eingesetzt. Das molare Verhältnis zwischen [(i) + (ii)] und (iii) liegt bei 50: 50 bis 100: 0. Das molare Verhältnis zwischen (iv) und (v) liegt bei 40: 60 bis 100: 0. Das resultierende Reaktionsprodukt wird partiell oder vollständig neutralisiert.

Weitere Beispiele geeigneter wäßriger Füller auf der Basis von Polyurethandispersionen werden in der internationalen Patentanmeldung WO 95/12626 im Detail beschrieben.

Sie enthalten als Bindemittel ein wasserverdünnbares Polyurethanharz, das herstellbar ist, indem in einer ersten Stufe
- ein Diisocyanat oder ein Gemisch aus Diisocyanaten und
- eine Verbindung, die mindestens eine gegenüber Isocyanatgruppen reaktive und mindestens eine zur Anionenbildung befähigte saure Gruppe im Molekül aufweist oder ein Gemisch aus solchen Verbindungen
- gegebenenfalls ein Polyester- und/oder Polyetherpolyol mit einem zahlenmittleren Molekulargewicht von 400 bis 5.000 oder ein Gemisch aus solchen Polyester- und/oder Polyetherpolyolen und
- gegebenenfalls ein Polyol mit einem zahlenmittleren Molekulargewicht von 60 bis 399 oder ein Gemisch aus solchen Polyolen
zu einem isocyanatgruppenhaltigen Präpolymeren (I) umgesetzt werden, wobei die Komponenten der ersten Stufe in einem solche Mengenverhältnis miteinander umgesetzt werden, daß die Isocyanatgruppen und die gegenüber Isocyanatgruppen reaktiven Gruppen in einem Äquivalentverhältnis von 1,04: 1,0 bis 10,0: 1,0 vorliegen und das aus den Komponenten der ersten Stufe sowie den nachfolgend beschriebenen Komponenten der zweiten Stufe hergestellte Polyurethanharz eine Säurezahl von 18 bis 70 mg KOH/g aufweist.

Das isocyanatgruppenhaltige Präpolymer (I) wird in einer zweiten Stufe mit
- einem Blockierungsmittel oder einer Mischung aus Blockierungsmitteln
umgesetzt, so daß ein blockierte Isocyanatgruppen enthaltendes Präpolymer (II) entsteht. Dabei wird die Komponente in einer solchen Menge eingesetzt, daß das Präpolymer (II) im statistischen Mittel noch mindestens eine freie Isocyanatgruppen pro Molekül enthält (Teilblockierung).

Das Präpolymer (II) wird desweiteren mit
- 2,0 bis 400 Gew.-%, bezogen auf die Menge an Präpolymer (II), eines aus einer Mischung aus Polyisocyanaten mit im statistischen Mittel mehr als 2,0 Isocyanatgruppen pro Molekül, die frei von zur Anionenbildung befähigten sauren Gruppen sind, und den vorstehend beschriebenen teilblockierten Polyisocyanaten
vermischt.

Die Mischung aus dem Präpolymer (II) und der vorstehend genannten Komponente werden mit
- einer Verbindung, die mindestens eine primäre oder sekundäre Aminogruppe und mindestens eine Hydroxylgruppe im Molekül enthält oder einer Mischung aus solchen Verbindungen
zu einem Polyurethanharz umgesetzt. Das resultierende Polyurethanharz wird anschließend partiell oder vollständig neutralisiert.

Weitere Beispiele geeigneter wäßriger Füller auf der Basis von Polyurethandispersionen werden in dem europäischen Patent EP 0 788 523 B1 beschrieben. Es handelt sich dabei um polyester- und aminoplastfreie Lackschichtformulierungen, die
- als Bindemittel ein wasserverdünnbares Polyurethanharz enthalten, das eine Säurezahl von 10 bis 60 und ein zahlenmittleres Molekulargewicht von 4.000 bis 25.000, vorzugsweise 8.000 bis 25.000, aufweist und herstellbar ist, indem
   - ein Polyester- und/oder Polyetherpolyol mit einem zahlenmittleren Molekulargewicht von 400 bis 5000 oder ein Gemisch aus solchen Polyester- und/oder Polyetherpolyolen,
   - ein Polyisocyanat oder einem Gemisch aus Polyisocyanaten,
   - eine Verbindung, die mindestens eine gegenüber Isocyanatgruppen reaktive und mindestens eine zur Anionenbildung befähigte Gruppe im Molekül aufweist, oder ein Gemisch aus solchen Verbindungen und ggf.
   - eine Hydroxyl- und/oder Aminogruppen enthaltende organische Verbindung mit einem Molekulargewicht von 40 bis 400 oder ein Gemisch aus solchen Verbindungen miteinander umgesetzt werden und das entstandende Reaktionsprodukt wenigstens teilweise neutralisiert wird, und
- Pigmente und/oder Füllstoffe enthalten, wobei das Verhältnis von Bindemittel zu Pigment bzw. Füllstoff zwischen 0,5:1 und 1,5:1 liegt.

In einer zweiten bevorzugten Ausführungsform werden nicht wäßrige Mehrkomponentenfüller verwendet, deren Zusammensetzung beispielsweise in den deutschen Patentanmeldungen DE 198 45 740 A1 oder DE 198 46 971 A1 beschrieben wird. Sie enthalten
- ein oder mehrere Polyesterharze, die eine OH-Zahl von 80 bis 200 mg KOH/g und eine Säurezahl < 10 mgKOH/g aufweisen,
- ein oder mehrere Polyacrylatharze, die eine OH-Zahl von 80 bis 200 mgKOH/g und eine Säurezahl < 20 mgKOH/g aufweisen,
- ein oder mehrere Di- und/oder Polyisocyanate mit freien und/oder blockierten Isocyanatgruppen,
- ein oder mehrere organische Lösemittel.

In einer dritten bevorzugten Ausführungsform werden thermisch und mit aktinischer Strahlung härtbare Dual-Cure-Füller verwendet. Ein besonders gut geeigneter Mehrkomponentenfüller wird beispielsweise in der nicht vorveröffentlichten deutschen Patentanmeldung DE 199 20 799.2 beschrieben. Vorzugsweise enthält dieser
- mindestens einen ersten Bestandteil mit im statistischen Mittel
   - mindestens zwei funktionellen Gruppen, die mindestens eine mit aktinischer Strahlung aktivierbare Bindung enthalten, und gegebenenfalls
   - mindestens einer funktionellen Gruppe, welche mit einer komplementären funktionellen Gruppe im zweiten Bestandteil thermische Vernetzungsreaktionen eingehen kann,
   im Molekül
und
- mindestens einen zweiten Bestandteil mit im statistischen Mittel
   - mindestens zwei funktionellen Gruppen, die mindestens eine mit aktinischer Strahlung aktivierbare Bindung enthalten, und
   - mindestens einer funktionellen Gruppe, welche mit einer komplementären funktionellen Gruppe im ersten Bestandteil thermische Vernetzungsreaktionen eingehen kann,
   im Molekül.

Die ersten und zweiten Bestandteile können niedermolekulare Verbindungen, d.h. Reaktivverdünner, Oligomere oder Polymere sein.

Beispiele geeigneter komplementärer funktioneller Gruppen ergeben sich aus der nachfolgenden Übersicht, worin R für organische Reste steht.

### Übersicht: Beispiele komplementärer funktioneller Gruppen im

### Erster Bestandteil und zweiter Bestandteil oder

### Zweiter Bestandteil und erster Bestandteil

| | |
|---|---|
| -SH | -C(O)-OH |
| -NH₂ | -C(O)-O-C(O)- |
| -OH | -NCO |
| >NH | -NH-C(O)-OR |
| -NHR | -CH₂-OH |
| | -CH₂-O-CH₃ |
| | NH-C(O)-CH(-C(O)OR)₂ |
| | -NH-C(O)-CH(-C(O)OR)(-C(O)-R) |
| | -NH-C(O)-NR₂ |
| | = Si(OR)₂ |
| | 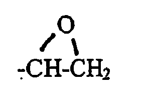 |
| -C(O)-OH | 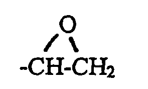 |
| -O-C(O)-CR=CH₂ | -OH |
| -O-CR=CH₂ | -NH₂ |
| | -C(O)-CH₂-C(O)-R |
| | -CH=CH₂ |
| | |

Besondere Vorteile resultieren, wenn isocyanatreaktive funktionelle Gruppen wie Hydroxyl-, Thiol-, primäre oder sekundäre Aminogruppen oder Iminogruppen, insbesondere Hydroxylgruppen, als funktionelle Gruppen im ersten Bestandteil und Isocyanatgruppen als funktionelle Gruppen im zweiten Bestandteil verwendet werden.

Die als erste Bindemittel eingesetzten Polymere bzw. Oligomere weisen üblicherweise ein zahlenmittleres Molekulargewicht von 500 bis 50.000, bevorzugt von 1.000 bis 5.000, auf. Bevorzugt weisen sie ein Doppelbindungsäquivalentgewicht von 400 bis 2.000, besonders bevorzugt von 500 bis 900, auf. Außerdem weisen sie bei 23 °C bevorzugt eine Viskosität von 250 bis 11.000 mPas auf. Vorzugsweise werden sie in einer Menge von 5 bis 90 Gew.-%, besonders bevorzugt 10 bis 80 Gew.-% und insbesondere 15 bis 70 Gew.-%, jeweils bezogen auf die Gesamtmenge des Füllers angewandt.

Beispiele geeigneter erster Bindemittel oder Harze entstammen den Oligomer-und/oder Polymerklassen der (meth)acrylfunlctionellen (Meth)Acrylcopolymeren, Polyetheracrylaten, Polyesteracrylaten, Polyestern, Epoxyacrylaten, Urethanacrylaten, Aminoacrylaten, Melaminacrylaten, Silikonacrylaten und Phosphazenacrylaten und den entsprechenden Methacrylaten. Bevorzugt werden erste Bindemittel eingesetzt, die frei von aromatischen Struktureinheiten sind. Bevorzugt werden daher Urethan(meth)acrylate, Phosphazen(meth)acrylate und/oder Polyester(meth)acrylate, besonders bevorzugt Urethan(meth)acrylate, insbesondere aliphatische Urethan(meth)acrylate, eingesetzt.

Die Urethan(meth)acrylate werden erhalten durch Umsetzung eines Di- oder Polyisocyanates mit einem Kettenverlängerungsmittel aus der Gruppe der Diole/Polyole und/oder Diamine/Polyamine und/oder Dithiole/Polythiole und/oder Alkanolamine und anschließende Umsetzung der restlichen freien Isocyanatgruppen mit mindestens einem Hydroxyalkyl(meth)acrylat oder Hydroxyalkylester anderer ethylenisch ungesättigter Carbonsäuren.

Die Mengen an Kettenverlängerungsmittel, Di- bzw. Polyisocyanat und Hydroxyalkylester werden dabei bevorzugt so gewählt, daß
- das Äquivalentverhältnis der NCO-Gruppen zu den reaktiven Gruppen des Kettenverlängerungsmittels (Hydroxyl-, Amino- bzw. Thiolgruppen) zwischen 3 : 1 und 1 : 2, bevorzugt bei 2 : 1, liegt und
- die OH-Gruppen der Hydroxyalkylester der ethylenisch ungesättigten Carbonsäuren in stöchiometrischer Menge in bezug auf die noch freien Isocyanatgruppen des Präpolymeren aus Isocyanat und Kettenverlängerungsmittel vorliegen.

Außerdem ist es möglich, die Urethan(meth)acrylate herzustellen, indem zunächst ein Teil der Isocyanatgruppen eines Di- oder Polyisocyanates mit mindestens einem Hydroxyalkylester umgesetzt wird und die restlichen Isocyanatgruppen anschließend mit einem Kettenverlängerungsmittel umgesetzt werden. Auch in diesem Fall werden die Mengen an Kettenverlängerungsmittel, Isocyanat und Hydroxyalkylester so gewählt, daß das Äquivalentverhältnis der NCO-Gruppen zu den reaktiven Gruppen des Kettenverlängerungsmittels zwischen 3 : 1 und 1 : 2, bevorzugt bei 2 : 1 liegt und das Äquivalentverhältnis der restlichen NCO-Gruppen zu den OH-Gruppen des Hydroxyalkylesters 1 : 1 beträgt. Selbstverständlich sind auch sämtliche Zwischenformen dieser beiden Verfahren möglich. Beispielsweise kann ein Teil der Isocyanatgruppen eines Diisocyanates zunächst mit einem Diol umgesetzt werden, anschließend kann ein weiterer Teil der Isocyanatgruppen mit dem Hydroxyalkylester und im Anschluß hieran können die restlichen Isocyanatgruppen mit einem Diamin umgesetzt werden.

Eine Flexibilisierung der Urethan(meth)acrylate ist beispielsweise dadurch möglich, daß entsprechende isocyanat-funktionelle Präpolymere bzw. Oligomere mit längerkettigen, aliphatischen Diolen und/oder Diaminen, insbesondere aliphatischen Diolen und/oder Diaminen mit mindestens 6 C-Atomen umgesetzt werden. Diese Flexibilisierungsreaktion kann dabei vor oder nach der Addition von Acryl- bzw. Methacrylsäure an die Oligomere bzw. Präpolymere durchgeführt werden.

Als Beispiele für geeignete Urethan(meth)acrylate seien auch die folgenden, im Handel erhältlichen polyfunktionellen aliphatischen Urethanacrylate genannt:
- Crodamer® UVU 300 der Firma Croda Resins Ltd., Kent, Großbritanniens;
- Genomer® 4302, 4235, 4297 oder 4316 der Firma Rahn Chemie, Schweiz;
- Ebecryl® 284, 294, IRR351, 5129 oder 1290 der Firma UCB, Drogenbos, Belgien;
- Roskydal® LS 2989 oder LS 2545 oder V94-504 der Firma Bayer AG, Deutschland;
- Viaktin® VTE 6160 der Firma Vianova, Österreich; oder
- Laromer® 8861 der Firma BASF AG sowie davon abgewandelte Versuchsprodukte.

Hydroxylgruppenhaltige Urethan(meth)acrylate sind beispielsweise aus den Patentschriften US 4,634,602 A oder US 4,424,252 A bekannt.

Ein Beispiel für ein geeignetes Polyphosphazen(meth)acrylat ist das Phosphazendimethacrylat der Firma Idemitsu, Japan.

Auch bei dem zweiten Bestandteil handelt es sich um ein Harz im Sinne der vorstehend bei der Beschreibung der ersten Harze aufgeführten Definition. Somit entstammen auch die zweiten Harze aus den vorstehend beschriebenen Oligomer-und Polymerklassen. Von Vorteil sind hierbei die (meth)acrylfunktionellen (Meth)Acrylcopolymerisate, welche daher erfindungsgemäß bevorzugt als zweite Harze verwendet werden.

Die zweiten Harze enthalten mindestens zwei, insbesondere mindestens drei der vorstehend beschriebenen funktionelle Gruppen, welche der Vernetzung mit aktinischer Strahlung dienen.

Des weiteren enthalten die zweiten Harze mindestens eine, vorzugsweise mindestens zwei und insbesondere mindestens drei funktionelle Gruppen, welche der thermischen Vernetzung dienen. Beispiele geeigneter funktioneller Gruppen dieser Art lassen sich der vorstehenden Übersicht entnehmen. Isocyanatgruppen sind hierbei besonders vorteilhaft und werden deshalb erfindungsgemäß ganz besonders bevorzugt als funktionelle Gruppen verwendet. Besondere Vorteile resultieren, wenn die zweiten Harze einen Gehalt an Isocyanatgruppen von 7 bis 20 Gew.-%, besonders bevorzugt 8 bis 18 Gew.-% und insbesondere 9 bis 16 Gew.-%, jeweils bezogen auf das zweite Harz, aufweisen.

Beispiele geeigneter zweiter Harze der vorstehend beschriebenen Art werden beispielsweise in den Patentschriften US 5,234,970 A, EP 0 549 116 A1 oder EP 0 618 244 A1 beschrieben.

Vorzugsweise werden die zweiten Harze in einer Menge von 5 bis 90 Gew.-%, besonders bevorzugt 10 bis 80 Gew.-% und insbesondere 15 bis 70 Gew.-%, jeweils bezogen auf die Gesamtmenge des Mehrkomponentenfüllers angewandt.

Nach der Applikation des Füllers wird die Naßschicht getrocknet, ohne sie vollständig zu härten. Dies bedeutet, daß die Naßschicht nicht oder nur partiell gehärtet wird. Durch die Trocknung resultiert eine Füllerschicht. Die resultierende Naßschicht kann aber auch, wie vorstehend, beschrieben gehärtet werden, wodurch die fertige Füllerlackierung resultiert.

Welcher Variante der Vorzug gegeben wird, richtet sich nach den Erfordernissen des Einzelfalls

Bei der Herstellung der erfindungsgemäßen Mehrschichtlackierung nach dem erfindungsgemäßen Verfahren wird in einem weiteren Verfahrensschritt mindestens ein, insbesondere ein Basislack auf die Füllerschicht oder die Füllerlackierung appliziert, wodurch eine Naßschicht resultiert.

Als Basislacke gekommen im Grunde alle farb- und/oder effektgebenden Basislacke in Betracht, die sich der vorstehend beschriebenen Weise applizieren und härten lassen. Vorzugsweise werden als Basislacke Wasserbasislacke auf der Basis von wäßrigen Polyurethandispersionen und/oder Polyacrylatdispersionen verwendet.

Geeignet sind beispielsweise die Wasserbasislacke auf der Basis von wäßrigen Polyurethandispersionen, wie sie in der deutschen Patentanmeldung DE 199 48 821 A1 beschrieben werden. Sie enthalten ein Polyurethan eines zahlenmittleren Molekulargewichts Mn von 3.000 bis 50.000 und einer Säurezahl von 10 bis 35, welches herstellbar ist, indem man
- mindestens ein Polyesterpolyol eines zahlenmittleren Molekulargewichts Mn von 1.000 bis 4.000, vorzugsweise 1.200 bis 3.000, einer Säurezahl von 0 bis 15, vorzugsweise 0 bis 10, und einer OH-Zahl von 35 bis 150, vorzugsweise 50 bis 120, auf der Basis acyclischer aliphatischer und cycloaliphatischer Dicarbonsäuren,
- ein Gemisch aus mindestens einem Diol und einem Triol,
- mindestens eine Verbindung, welche mindestens zwei mit Isocyanat reaktive funktionelle Gruppen und mindestens eine zur Anionenbildung befähigte funktionelle Grupppe aufweist, und
- ein Gemisch aus mindestens einem acyclischen aliphatischen und mindestens einem cycloaliphatischen Diisocyanat
mit den Maßgaben, daß
(i) in dem Gemisch die Diole und die Triole im molaren Verhältnis von 2 : 1 bis 13 : 1, vorzugsweise 2,5 : 1 bis 8 : 1, vorliegen,
(ii) das molare Verhältnis der Polyesterpolyole zu dem Gemisch bei 4,5 : 1 bis 1 : 1, vorzugsweise 3,5 : 1 bis 1,5 : 1 liegt und
(iii) in dem Diisocyanatgemisch die acyclischen aliphatischen und cycloaliphatischen Diisocyanate im molaren Verhältnis von 1 : 0,16 bis 1 : 6, vorzugsweise 1 : 0,5 bis 1 : 5,5 vorliegen;
zu einem isocyanatgruppenhaltigen Präpolymer umsetzt, wonach man das Präpolymer mit einem multifunktionellen Amin oder Aminoalkohol kettenverlängert und gegebenenfalls neutralisiert.

Weitere Beispiele geeigneter Wasserbasislacke auf der Basis von Polyurethandispersionen sind aus der deutschen Patentanmeldung DE 41 10 520 A1 oder dem europäischen Patent 0 752 455 B1 bekannt.

Geeignet sind beispielsweise auch die Wasserbasislacke auf der Basis von wäßrigen Polyacrylatdispersionen, wie sie beispielsweise in der deutschen Patentanmeldung DE 195 47 944 A1 beschrieben werden. Das hierin verwendete Polyacrylat hat, bezogen auf sein Gesamtgewicht, einen Gehalt von 30 bis 60 Gew.-% C₁- bis C₈-Alkyl(meth)acrylat-haltige Monomere, 30 bis 60 Gew.-% vinylaromatische Monomere und 0,5 bis 10 Gew.-% (Meth)Acrylsäure. Die Dispersion enthält desweiteren ein Rheologiehilfsmittel, das ein synthetisches Polymer mit ionischen und/oder assoziativ wirkenden Gruppen darstellt.

Die Basislack-Naßschicht wird entweder, ohne sie vollständig zu härten, getrocknet, wodurch eine Basislackschicht resultiert, oder sie wird für sich alleine oder gemeinsam mit der Füllerschicht, wie vorstehend beschrieben, gehärtet, wodurch die Basislackierung resultiert. Vorzugsweise wird die Naßschicht getrocknet.

Bei der Herstellung der erfindungsgemäßen Mehrschichtlackierung nach dem erfindungsgemäßen Verfahren wird in einem dritten Verfahrensschritt mindestens ein, insbesondere ein, thermisch und mit aktinischer Strahlung härtbarer Mehrkomponentenklarlack (Dual-Cure-Klarlack) auf die Basislackschicht oder die Basislackierung appliziert. Vorzugsweise wird der Dual-Cure-Klarlack auf die Basislackschicht aufgetragen.

Der Dual-Cure-Klarlack kann ein wäßriger oder ein konventioneller Klarlack sein und enthält mindestens
(A) eine Komponente, enthaltend
   (A1) mindestens einen Bestandteil mit mindestens zwei isocyanatreaktiven funktionellen Gruppen und
   (A2) mindestens einen Bestandteil mit mindestens einer funktionellen Gruppe, die mindestens eine mit aktinischer Strahlung aktivierbare Bindung enthält,
   und
(B) eine Komponente, enthaltend
   (B2) mindestens eine Verbindung mit mindestens einer Isocyanatgruppe und mindestens einer funktionellen Gruppe, die mindestens eine mit aktinischer Strahlung aktivierbare Bindung enthält.

Beispiele geeigneter isocyanatreaktiver funktioneller Gruppen sind die vorstehend beschriebenen.

Die Komponente (A) enthält mindestens einen rein thermisch härtbaren Bestandteil (A1) mit im statistischen Mittel mindestens zwei, insbesondere mindestens drei isocyanatreaktiven funktionellen Gruppen im Molekül.

Der Bestandteil kann niedermolekular, oligomer oder polymer sein. Vorzugsweise ist er oligomer oder polymer.

Die Grundstrukturen der niedermolekularen Bestandteile (A1) sind nicht kritisch, sondern können den unterschiedlichsten organischen Verbindungsklassen entstammen. Beispiele geeigneter Verbindungsklassen sind gegebenenfalls Heteroatome wie Sauerstoff, Stickstoff, Schwefel, Silizium oder Phosphor enthaltende Alkyl-, Cycloalkyl-, Alkylcycloalkyl-, Cycloalkylalkyl-, Aryl-, Alkylaryl-, Cycloalkylaryl- Arylalkyl- und/oder Arylcycloalkylverbindungen, die gegebenenfalls noch weitere Substituenten tragen, die indes bei der Herstellung der Bestandteile, ihrer Lagerung und/oder bei ihrer Anwendung nicht mit den mit aktinischer Strahlung aktivierbaren Bindungen reagieren dürfen. Beispiele geeigneter niedermolekularer Bestandteile (A1) sind die vorstehend beschriebenen Reaktiverdünner für die thermische Häutung.

Die Grundstrukturen der oligomeren oder polymeren Bestandteile (A1) sind ebenfalls nicht kritisch und können den unterschiedlichsten Oligomer- und Polymerklassen entstammen. Beispiele geeigneter Oligomer- und Polymerklassen sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen. Hinsichtlich möglicherweise vorhandener Substituenten gilt das vorstehend Gesagte sinngemäß.

Beispiele gut geeigneter (Co)Polymerisate (A1) sind Poly(meth)acrylate und partiell verseifte Polyvinylester. Erfindungsgemäß weisen die (Meth)Acrylatcopolymerisate besondere Vorteile auf und werden deshalb besonders bevorzugt verwendet.

Die (Meth)Acrylatcopolymerisate (A1) sind an sich bekannte Polymere. Ihre Herstellung weist keine verfahrenstechnischen Besonderheiten auf, sondern erfolgt mit Hilfe der auf dem Kunststoffgebiet üblichen und bekannten Methoden der kontinuierlichen oder diskontinuierlichen radikalisch initiierten Copolymerisation in Masse, Lösung, Emulsion, Miniemulsion oder Mikroemulsion unter Normaldruck oder Überdruck in Rührkesseln, Autoklaven, Rohrreaktoren, Schlaufenreaktoren oder Taylorreaktoren bei Temperaturen von 50 bis 200°C.

Beispiele geeigneter (Meth)Acrylatcopolymerisate (A1) und Copolymerisationsverfahren werden in den Patentanmeldungen DE 197 09 465 A1, DE 197 09 476 A1, DE 28 48 906 A1, DE 195 24 182 A1, DE 198 28 742 A1, DE 196 28 143 A1, DE 196 28 142 A1, EP 0 554 783 A1, WO 95/27742, WO 82/02387 oder WO 98/02466 beschrieben.

Beispiele gut geeigneter Polyadditionsharze und/oder Polykondensationsharze (A1) sind Polyester, Alkyde, Polyurethane, Polylactone, Polycarbonate, Polyether, Epoxidharz-Amin-Addukte, Polyharnstoffe, Polyamide oder Polyimide.

Erfindungsgemäß weisen die Polyurethane (A1) besondere Vorteile auf und werden deshalb besonders bevorzugt verwendet. Beispiele für Polyurethane, die sich mit Vorteil in wäßrigen Dual-Cure-Klarlacken verwenden lassen, sind aus den deutschen Patentanmeldungen DE 199 04 330 A1, DE 198 55 125 A1 oder 198 55 167 A1 bekannt.

Der Gehalt der Dual-Cure-Klarlacke an den Bestandteilen (A1) kann breit variieren. Vorzugsweise liegt er bei 1 bis 60, bevorzugt 3 bis 55 und insbesondere 5 bis 50 Gew.-%, jeweils bezogen auf den Festkörper des Dual-Cure-Klarlacks.

Die Komponente (A) des Dual-Cure-Klarlacks enthält desweiteren mindestens einen Bestandteil (A2), der im statistischen Mittel mindestens eine funktionelle Gruppe im Molekül enthält, die mindestens eine, insbesondere eine mit aktinischer Strahlung aktivierbare Bindung aufweist.

Beispiele geeigneter mit aktinischer Strahlung aktivierbarer Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen. Von diesen werden die Doppelbindungen, insbesondere die Kohlenstoff-KohlenstoffDoppelbindungen ("Doppelbindungen"), bevorzugt angewandt.

Gut geeignete Doppelbindungen liegen beispielsweise in (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl-oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vor. Von diesen sind (Meth)Acrylatgruppen, insbesondere Acrylatgruppen, von besonderem Vorteil und werden deshalb erfindungsgemäß ganz besonders bevorzugt verwendet.

Die Doppelbindungen können in dem Bestandteil als endständige und/oder laterale Doppelbindungen vorliegen.

Als Grundstrukturen kommen die vorstehend beschriebenen niedermolekularen, oligomeren und polymeren Grundstrukturen in Betracht.

Beispiele geeigneter niedermolekularer Bestandteile (A2) sind die vorstehend beschriebenen mit aktinischer Strahlung härtbaren Reaktiverdünner.

Beispiele geeigneter oligomerer und polymerer Bestandteile (A2) sind Polyurethane mit endständigen und/oder lateralen Doppelbindungen. Die Herstellung von Polyurethanen mit endständigen und/oder lateralen Doppelbindungen weist keine methodischen Besonderheiten auf, sondern wird im Detail in den Patentanmeldungen und Patenten DE 196 45 761 A, WO 98/10028, EP 0 742 239 A1,EP 0 661 321 B1,EP 0 608 021 B1, EP 0 447 998 B1, oder EP 0 462 287B1 beschrieben.

Es kommen auch die in der europäischen Patentanmeldung EP 0 659 979 A1 beschriebenen acrylierten Methacrylatcopolymerisate als Bestandteile (A2) in Betracht.

Der Gehalt des Dual-Cure-Klarlacks an dem vorstehend beschriebenen Bestandteil (A2) kann breit variieren. Vorzugsweise liegt er bei 5 bis 60, bevorzugt 6 bis 55 insbesondere 7 bis 50 Gew.-%, jeweils bezogen auf den Festkörper des Dual-Cure-Klarlacks.

Die Herstellung der Komponente (A) weist keine methodischen Besonderheiten auf, sondern erfolgt mit Hilfe der üblichen und bekannten Mischverfahren und - vorrichtungen wie Rührkessel, Dissolver, Ultraturrax oder Extruder.

Die Komponente (B) enthält mindestens eine Verbindung (B2) mit mindestens einer Isocyanatgruppe und mindestens einer funktionellen Gruppe mit mindestens einer mit aktinischer Strahlung aktivierbaren Bindung. Diese Verbindungen (B2) sind bekanntermaßen erhältlich durch die Umsetzung der vorstehend beschriebenen Diisocyanate und Polyisocyanate mit Verbindungen, die mindestens eine, insbesondere eine, der vorstehend beschriebenen isocyanatreaktiven funktionellen Gruppen und mindestens eine, insbesondere eine, mit aktinischer Strahlung aktivierbare Bindung enthalten. Beispiele geeigneter Verbindungen dieser Art sind
- 2-Hydroxyethyl-, 2-Hydroxypropyl-, 3-Hydroxypropyl-, 3-Hydroxybutyl-, 4-Hydroxybutyl-, Bis(hydroxymethyl)cyclohexan-, Neopentylglykol-, Diethylenglykol-, Dipropylenglykol-, Dibutylenglykol-, Triethylenglykolacrylat, -methacrylat, -ethacrylat, -crotonat, -cinnamat, - vinylether, -allylether, -dicyclopentadienylether, -norbomenylether, - isoprenylether, -isopropenylether oder -butenylether;
- Trimethylolpropandi-, Glycerindi-, Trimethylolethandi-, Pentaerythrittri-oder Homopentaerythrittriacrylat, -methacrylat, -ethacrylat, -crotonat, - cinnamat, -vinylether, -allylether, -dicyclopentadienylether, - norbomenylether, -isoprenylether, -isopropenylether oder -butenylether; oder
- Umsetzungsprodukte aus cyclischen Estern, wie z.B. epsilon-Caprolacton, und den vorstehend beschriebenen hydroxylgruppenhaltigen Monomeren; oder
- 2-Aminoethyl(meth)acrylat und/oder 3-Aminopropyl(meth)acrylat.

Methodisch gesehen weist die Herstellung dieser Verbindungen (B2) keine Besonderheiten auf, sondern erfolgt, wie beispielsweise in der europäischen Patentanmeldung EP 0 928 800 A1 beschrieben.

Der Gehalt der Verbindungen (B2) kann breit variieren. Vorzugsweise liegt der Gehalt bei 5 bis 60, bevorzugt 6 bis 55 und insbesondere 7 bis 50 Gew.-%, jeweils bezogen auf den Festkörper des Dual-Cure-Klarlacks.

Auch die Herstellung der Komponente (B) weist keine methodischen Besonderheiten auf, sondern erfolgt durch das Vermischen ihrer Bestandteile. Zur Einstellung einer niedrigen Viskosität können der Komponente (B) noch mindestens eines der vorstehend beschriebenen organischen Lösemittel zugemischt werden.

Enthält der Dual-Cure-Klarlack lediglich die Komponenten (A) und (B), handelt es sich um ein Zweikomponentensystem. Indes können unterschiedliche Bestandteile der Einzelkomponenten (A) und/oder (B) getrennt von diesen gelagert und erst kurz vor der Applikation zu dem Mehrkomponentensystem vereinigt werden. Im allgemeinen wird das Zweikomponentensystem bevorzugt, weil es weniger Aufwand bei seiner Herstellung bereitet.

Beispiele geeigneter, erfindungsgemäß zu verwendender, wäßriger Dual-Cure-Klarlacke sind aus den deutschen Patentanmeldungen DE 198 55 167 A1 oder DE 198 55 146 A1 bekannt.

Die Herstellung der Dual-Cure-Klarlacke aus den vorstehend beschriebenen Komponenten bietet keine methodischen Besonderheiten sondern wird mit Hilfe der üblichen und bekannten, vorstehend beschriebenen Mischvorrichtungen und - verfahren oder mittels üblicher Zwei- oder Mehrkomponenten-Dosier- und - mischanlagen durchgeführt.

Die Dual-Cure-Klarlackschicht wird nach ihrer Applikation für sich alleine, gemeinsam mit der Basislackschicht (Naß-in-naß-Verfahren) oder gemeinsam mit der Basislackschicht oder Füllerschicht (erweitertes Naß-in-naß-Verfahren) gehärtet, wodurch die erfindungsgemäße Mehrschichtlackierung resultiert.

Die in erfindungsgemäßer Verfahrensweise hergestellte erfindungsgemäße Mehrschichtlackierung weist trotz der niedrigen Härtungstemperaturen die für den Einsatz in der Automobilserienlackierung erforderliche Qualität auf. So sind ihre
optischen Eigenschaften (Appearance) wie
- Glanz,
- Abbildungsunterscheidbarkeit (DOI),
- Deckvermögen,
- Gleichmäßigkeit des Farbtons in der Fläche und
- prägnante dichroitische optische Effekte,
ihre mechanische Eigenschaften wie
- Härte,
- Kratzfestigkeit,
- Abriebfestigkeit und
- Schlagfestigkeit,
ihre Haftungseigenschaften wie
- Zwischenschichthaftung und
- Haftung auf dem Substrat
sowie ihre chemischen Eigenschaften wie
- Witterungsbeständigkeit,
- UV- Beständigkeit,
- Beständigkeit gegenüber dem Weißanlaufen,
- Etch-Beständigkeit und
- Beständigkeit gegen Chemikalien (insbesondere Säuren und Basen), Lösemittel, Baumharz, Vogelkot und Benzin
auf einem so hohen Niveau, daß sie auch für die Lackierung von besonders hochwertigen Automobilen der Oberklasse in Betracht kommen.

### Beispiele

### Herstellbeispiel 1

### Die Herstellung eines Methacrylatcopolymerisats (A1)

In einem Laborreaktor mit einem Nutzvolumen von vier Liter, ausgestattet mit einem Rührer, zwei Tropftrichtern (Monomerzulauf und Initiatorzulauf), Stickstoffeinleitungsrohr, Thermometer und Rückflußkühler, wurden 650 Gewichtsteile einer Fraktion aromatischer Kohlenwasserstoffe mit einem Siedebereich von 158 bis 172°C eingewogen. Das Lösemittel wurde auf 140°C erhitzt. Danach wurden unter Rühren eine Monomermischung aus 652 Gewichtsteilen Ethylhexylacrylat, 383 Gewichtsteilen Hydroxyethylmethacrylat, 143 Gewichtsteilen Styrol, 213 Gewichtsteilen 4-Hydroxybutylacrylat und 21 Gewichtsteilen Acrylsäure gleichmäßig während vier Stunden sowie eine Initiatorlösung aus 113 Gewichtsteilen tert.-Butylperethylhexanoat und 113 Gewichtsteilen des Lösemittels gleichmäßig während 4,5 Stunden zudosiert. Mit der Dosierung der Monomermischung und der Initiatorlösung wurde gleichzeitig begonnen. Nach Beendigung des Initiatorzulaufs wurde die resultierende Reaktionsmischung während zwei Stunden bei 140°C nachpolymerisiert und anschließend abgekühlt. Die resultierende Polymerlösung wurde mit einer Mischung aus 1-Methoxypropylacetat-2, Butylglykolacetat und Butylacetat verdünnt, so daß sich ein Festkörpergehalt von 65 Gew.-% (eine Stunde im Umluftofen bei 130°C) einstellte. Die Säurezahl lag bei 15 mg KOH/g Festkörper.

### Herstellbeispiel 2

### Die Herstellung eines Dual-Cure-Klarlacks

Für die Herstellung der Komponente (A) des Dual-Cure-Klarlacks wurden 35,9 Gewichtsteile des Methacrylatcopolymerisats (A1) des Herstellbeispiel 1, 20 Gewichtsteile Dipentaerythrittolpentaacrylat, 1,0 Gewichtsteile substituiertes Hydroxyphenyltriazin, 1,0 Gewichtsteile N-Methyl-2,2,6,6-tetramethylpiperidinylester, 0,4 Gewichtsteile des handelsüblichen Verlaufmittels Byk® 306 der Firma Byk Chemie, 27,4 Gewichtsteile Butylacetat (98/100), 10,8 Gewichtsteile Solventnaphtha® sowie eine Mischung der handelsüblichen Fotoinitiatoren Irgacure® 184 (2,0 Gewichtsteile; Ciba Specialty Chemicals), Genocure® MBF (1,0 Gewichtsteile; Firma Rahn Chemie) und Lucirin® TPO (0,5 Gewichtsteile; Firma BASF AG) miteinander vermischt.

Als Komponente (B) wurde das Isocyanatoacrylat Roskydal® UA VPLS 2337 (Isocyanatgehalt: 12 Gew.-%) der Firma Bayer Aktiengesellschaft verwendet.

Die Komponenten (A) und (B) wurden im Gewichtsverhältnis von 100: 30 miteinander vermischt. Man erhielt einen spritzfertigen Dual-Cure-Klarlack einen Viskosität von 18 Sekunden im DIN4-Auslaufbecher. Die Dichte lag bei 1,026 g/cm³, der Festkörpergehalt bei 62 Gew.-%.

### Beispiel 1

### Die Herstellung einer erfindungsgemäßen Mehrschichtlackierung

Zur Herstellung der erfindungsgemäßen Mehrschichtlackierung wurden als grundierte Substrate Prüftafeln aus Karosserienstahl verwendet, die mit handelsüblicher Zinkphosphatlösung vorbehandelt und mit einer kathodisch abgeschiedenen und thermisch gehärteten Elektrotauchlackierung einer Schichtdicke von 18 bis 22 µm beschichtet worden waren.

Auf die Elektrotauchlackierung wurde ein handelsüblicher, wäßriger Zweikomponentenfüller der Firma BASF Coatings AG, wie er üblicherweise für die Beschichtung von Kunststoffen verwendet wird, appliziert und während 30 Minuten bei 90°C thermisch gehärtet. Es resultierte eine Füllerlackierung mit einer Schichtdicke von 35 bis 40 µm

Auf die Füllerlackierung wurde ein handelsüblicher schwarzer Wasserbasislack der Firma BASF Coatings AG, wie er üblicherweise für die Beschichtung von Kunststoff verwendet wird, aufgetragen und während 15 Minuten bei 80°C getrocknet.

Abschließend wurde der Dual-Cure-Klarlack des Herstellbeispiel 2. in einem Kreuzgang mit einer Fließbecherpistole pneumatisch appliziert. Die resultierende Klarlackschicht wurde gemeinsam mit der Basislackschicht gehärtet. Dabei erfolgte die Härtung in einem Stufenprozeß während fünf Minuten bei Raumtemperatur und 15 Minuten bei 80°C, gefolgt von der Härtung mit UV-Strahlung (Dosis: 1.500 mJ/cm²) und einer abschließenden thermischen Härtung bei 90°C während 30 Minuten.

Es resultierte eine Basislackierung mit einer Schichtdicke von 15 µm und eine Klarlackierung mit einer Schichtdicke von 40 bis 45 µm.

Die erfindungsgemäße Mehrschichtlackierung wies einen Glanz nach DIN 67530 von 88,4 und eine Mikroeindringhärte von 105 N/mm² (Universalhärte bei 25,6 mN, Fischersope 100 V mit Diamantpyramide nach Vickers) auf.

Die Kratzfestigkeit der Mehrschichtlackierung wurden nach dem Sandtest bestimmt. Hierzu wurde die Lackoberfläche mit Sand belastet (20g Quarz-Silbersand 1,5-2,0 mm). Der Sand wurde in einen Becher (Boden plan abgeschnitten) gegeben, der fest auf der Prüftafel befestigt wurde. Mittels eines Motorantriebes wurde die Tafel mit dem Becher und dem Sand in Schüttelbewegungen versetzt. Die Bewegung des losen Sandes verursachte dabei die Beschädigung der Lackoberfläche (100 Doppelhübe in 20 s). Nach der Sandbelastung wurde die Prüffläche vom Abrieb gereinigt, unter einem kalten Wasserstrahl vorsichtig abgewischt und anschließend mit Druckluft getrocknet. Gemessen wurde der Glanz nach DIN 67530 vor und nach Beschädigung (Meßrichtung senkrecht zur Kratzrichtung):

| | |
|---|---|
| Anfang: | 88,4 |
| nach Schädigung: | 74,9 |

Außerdem wurde die Kratzfestigkeit noch nach dem Bürstentest bestimmt. Für diesen Test wurden die Prüftafeln mit der Mehrschichtlackierung mindestens 2 Wochen bei Raumtemperatur gelagert, bevor die Prüfung durchgeführt wurde.

Die Kratzfestigkeit wurde mit Hilfe des in Fig. 2 auf Seite 28 des Artikels von P. Betz und A. Bartelt, Progress in Organic Coatings, 22 (1993), Seiten 27 - 37, beschriebenen BASF-Bürstentests, der allerdings bezüglich des verwendeten Gewichts (2000 g statt der dort genannten 280 g) abgewandelt wurde, folgendermaßen beurteilt:

Bei dem Test wurde die Lackoberfläche mit einem Siebgewebe, welches mit einer Masse belastet wurde, geschädigt. Das Siebgewebe und die Lackoberfläche wurden mit einer Waschmittel-Lösung reichlich benetzt. Die Prüftafel wurde mittels eines Motorantriebs in Hubbewegungen unter dem Siebgewebe vor- und zurückgeschoben.

Der Prüfkörper war mit Nylon-Siebgewebe (Nr. 11, 31 µm Maschenweite, Tg 50 °C) bespanntes Radiergummi (4,5 x 2,0 cm, breite Seite senkrecht zur Kratzrichtung). Das Auflagegewicht betrug 2000 g.

Vor jeder Prüfung wurde das Siebgewebe erneuert, dabei war die Laufrichtung der Gewebemaschen parallel zur Kratzrichtung. Mit einer Pipette wurde ca. 1 ml einer frisch aufgerührten 0,25%igen Persil-Lösung vor dem Radiergummi aufgebracht. Die Umdrehungszahl des Motors wurde so eingestellt, daß in einer Zeit von 80 s 80 Doppelhübe ausgeführt wurden. Nach der Prüfung wurde die verbleibende Waschflüssigkeit mit kaltem Leitungswasser abgespült, und die Prüftafel wurden mit Druckluft trockengeblasen. Gemessen wurde der Glanz nach DIN 67530 vor und nach Beschädigung (Meßrichtung senkrecht zur Kratzrichtung):

| | |
|---|---|
| Anfang: | 88,4 |
| nach Schädigung: | 83,7 |

Die Versuchsergebnisse belegen die hervorragenden optischen Eigenschaften, die hohe Kratzfestigkeit und hohe Abriebfestigkeit der Mehrschichtlackierung.

Die Haftungseigenschaften der erfindungsgemäßen Mehrschichtlackierung wurde mit Hilfe des High-Pressure-Tests bestimmt. Der Test wurde vor und nach der vierzehntägigen Belastung der Prüftafeln im Schwitzwasserkonstantklima durchgeführt. Für den Test wurde in die Mehrschichtlackierung ein Kreuz eingeritzt. Die eingeritzte Stelle wurde mit einem Gerät der Firma Walter Typ LTA2 mit einem Wasserstrahl (Druck: 80 bar Wassertemperatur: 50°C) aus einem Abstand Düsenspitze/Prüftafel von 12 cm während 30 Sekunden bei einer Geräteeinstellung F2 bestrahlt. Die Haftung war sowohl vor als auch nach der Exposition im Schwitzwasserkonstantklima sehr gut; es waren keinerlei Abplatzungen zu erkennen.

## Patentansprüche

1. Farb- und/oder effektgebende Mehrschichtlackierung mit der Qualität einer Automobilserienlackierung, herstellbar, indem man
1. mindestens einen bei einer Temperatur < 120°C thermisch oder bei einer Temperatur < 120° C thermisch und mit aktinischer Strahlung härtbaren Füller auf ein grundiertes oder ungrundiertes Substrat appliziert und die resultierende Nassschicht
1.1 ohne sie vollständig zu härten, trocknet, wodurch eine Füllerschicht resultiert, oder
1.2 bei einer Temperatur < 120°C thermisch oder bei einer Temperatur < 120°C thermisch und mit aktinischer Strahlung härtet, wodurch eine Füllerlackierung resultiert,
2. mindestens einen bei einer Temperatur < 120°C thermisch härtbaren oder bei einer Temperatur < 120°C thermisch und mit aktinischer Strahlung härtbaren Basislack auf die Füllerschicht (1.1) oder die Füllerlackierung (1.2) appliziert und die resultierende Nassschicht
2.1 ohne sie vollständig zu härten, trocknet, wodurch eine Basislackschicht resultiert, oder
2.2 für sich alleine oder gemeinsam mit der Füllerschicht (1.1) bei einer Temperatur < 120°C thermisch oder bei einer Temperatur < 120°C thermisch und mit aktinischer Strahlung härtet, wodurch eine farb-undloder effektgebende Basislackierung resultiert,
3. mindestens einen mit aktinischer Strahlung sowie bei einer Temperatur von < 120°C thermisch härtbaren Mehrkomponentenklarlack auf die Basislackschicht (2.1) oder die Basislackierung (2.2) appliziert und die resultierende Nassschicht
3.1 für sich alleine,
3.2 gemeinsam mit der Basislackschicht (2.1) oder
3.3 gemeinsam mit der Basislackschicht (2.1) und der Füllerschicht (1.1)
mit aktinischer Strahlung sowie bei einer Temperatur < 120°C thermisch härtet, wodurch die Mehrschichtlackierung resultiert, **dadurch gekennzeichnet, dass** die thermisch und mit aktinischer Strahlung härtbaren Mehrkomponentenklarlacke mindestens
(A) eine Komponente, enthaltend
(A1) mindestens einen Bestandteil mit mindestens zwei isocyanatreaktiven funktionellen Gruppen und
(A2) mindestens einen Bestandteil mit mindestens einer funktionellen Gruppe, die mindestens eine mit aktinischer Strahlung aktivierbare Bindung enthält,
(B) eine Komponente, enthaltend
(B2) mindestens eine Verbindung mit mindestens einer Isocyanatgruppe und mindestens einer funktionellen Gruppe, die mindestens eine mit aktinischer Strahlung aktivierbare Bindung enthält;
enthalten.

2. Mehrschichtlackierung nach Anspruch 1, **dadurch gekennzeichnet, dass** man als aktinische Strahlung elektromagnetische Strahlung und/oder Korpuskularstrahlung verwendet.

3. Mehrschichtlackierung nach Anspruch 2, **dadurch gekennzeichnet, dass** man als elektromagnetische Strahlung nahes infrarot, sichtbares Licht, UV-Strahlung oder Röntgenstrahlung und als Korpuskularstrahlung Elektronenstrahlung verwendet.

4. Mehrschichtlackierung nach einem der Ansprüche1 bis 3, **dadurch gekennzeichnet, dass** man die thermische Härtung bei einer Temperatur < 110°C durchführt.

5. Mehrschichtlackierung nach einem der Ansprüche 1 bis 4, **dadurch gekennzeichnet, dass** man als Füller
- thermisch härtbare Füller auf der Basis von wässrigen Polyurethandispersionen,
- thermisch härtbare Mehrkomponentenfüller oder
- thermisch und mit aktinischer Strahlung härtbare Füller
verwendet.

6. Mehrschichtlackierung nach einem der Ansprüche 1 bis 5, **dadurch gekennzeichnet, dass** man als Basislacke Wasserbasislacke auf der Basis von wässrigen Polyurethandispersionenund/oder Polyacrylatdispersionen verwendet.

7. Mehrschichtlackierung nach Anspruch 1, **dadurch gekennzeichnet, dass** als mit aktinischer Strahlung aktivierbare Bindungen Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen verwendet werden.

8. Mehrschichtlackierung nach Anspruch 8, **dadurch gekennzeichnet, dass** Kohlenstoff-Kohlenstoff-Dopppelbindungen ("Doppelbindungen") verwendet werden.

9. Mehrschichtlackierung nach Anspruch 8, **dadurch gekennzeichnet, dass** die Doppelbindungen als (Meth)Acrylat-, Ethacrytat-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl- oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vorliegen.

10. Mehrschichtlackierung nach einem der Ansprüche 1 bis 9, **dadurch gekennzeichnet, dass** es sich bei den isocyanatreaktiven funktionellen Gruppen um Thiol-, primäre odersekundäre Amino-, Imino- oder Hydroxylgruppen handelt.

11. Mehrschichtlackierung nach einem der Ansprüche 1 bis 10, **dadurch gekennzeichnet, dass** der mit aktinischer Strahlung sowie bei einer Temperatur von < 120°C thermisch härtbare Mehrkomponentenklarlack Nanopartikel enthält.

12. Verfahren zur Herstellung einer farb- und/oder effektgebenden, Mehrschichtlackierung mit der Qualität einer Automobilserienlackierung gemäß einem der Ansprüche 1 bis 11, durch Applikation mindestens einer Füllerlackierung, mindestens einer Basislackierung und mindestens einer Klarlackierung auf ein grundiertes oder ungrundiertes Substrat und Härtung der resultierenden Nassschichten, **dadurch gekennzeichnet, dass** man
1. mindestens einen bei einer Temperatur < 120°C thermisch oder bei einer Temperatur < 120°C thermisch und mit aktinischer Strahlung härtbaren Füller auf ein grundiertes oder ungrundiertes Substrat appliziert und die resultierende Nassschicht
1.1 ohne sie vollständig zu härten, trocknet, wodurch eine Füllerschicht resultiert, oder
1.2 bei einer Temperatur < 120°C thermisch oder bei einer Temperatur < 120°C thermisch und mit aktinischer Strahlung härtet, wodurch eine Füllerlackierung resultiert,
2. mindestens einen bei einer Temperatur < 120°C thermisch härtbaren oder bei einer Temperatur < 120°C thermisch und mit aktinischer Strahlung härtbaren Basislack auf die Füllerschicht (1.1) oder die Füllerlackierung (1.2) appliziert und die resultierende Nassschicht
2.1 ohne sie vollständig zu härten, trocknet, wodurch eine Basislackschicht resultiert, oder
2.2 für sich alleine oder gemeinsam mit der Füllerschicht (1.1) bei einer Temperatur < 120°C thermisch oder bei einer Temperatur < 120°C thermisch und mit aktinischer Strahlung härtet; wodurch eine farb-und/oder effektgebende Basislackierung resultiert,
3. mindestens einen mit aktinischer Strahlung und bei einer Temperatur von < 120°C thermisch härtbaren Mehrkomponentenklarlack auf die Basislackschicht (2.1) oder die Basislackierung (2.2) appliziert und die resultierende Nassschicht
3.1 für sich alleine,
3.2 gemeinsam mit der Basislackschicht (2.1) oder
3.3 gemeinsam mit der Basislackschicht (2.1) und der Füllerschicht (1.1)
mit aktinischer Strahlung sowie thermisch bei einer Temperatur < 120°C thermisch härtet, wodurch die Klarlackierung, die Klartackierung und die Basislackierung oder die Klarlackierung, die Basislackierung und die Füllerlackierung resultiert oder resultieren, **dadurch gekennzeichnet, dass** die thermisch und mit aktinischer Strahlung härtbaren Mehrkomponentenklarlacke mindestens
(A) eine Komponente, enthaltend
(A1) mindestens einen Bestandteil mit mindestens zwei isocyanatreaktiven funktionellen Gruppen und
(A2) mindestens einen Bestandteil mit mindestens einer funktionellen Gruppe, die mindestens eine mit aktinischer Strahlung aktivierbare Bindung enthält,
(B) eine Komponente, enthaltend
(B2) mindestens eine Verbindung mit mindestens einer Isocyanatgruppe und mindestens einer funktionellen Gruppe, die mindestens eine mit aktinischer Strahlung aktivierbare Bindung enthält;
enthalten.

13. Verwendung der Mehrschichtlackierungen gemäß einem der Patentansprüche 1 bis 11 oder einer gemäß Anspruch 12 hergestellten Mehrschichtlackierung für die Automobilerstlackierung, die Autoreparaturlackierung, die Lackierung von Möbeln, Türen, Fenstern oder Bauwerken im Innen- und Außenbereich, für die industrielle Lackierung, inklusive Coil Coating, Container Coating und die Beschichtungen oder Imprägnierung elektrotechnischer Bauteile.

## Claims

1. Multicoat color and/or effect coating system with the quality of an automotive OEM coating system, which is producible by
1. applying at least one surfacer curable thermally at a temperature < 120°C or curable with actinic radiation and thermally at a temperature < 120°C to a primed or unprimed substrate and
1.1 drying the resultant wet film without completely curing it, to give a surfacer film, or
1.2 curing the resultant wet film thermally at a temperature < 120°C or with actinic radiation and thermally at a temperature < 120°C, to give a surfacer coat,
2. applying at least one basecoat material curable thermally at a temperature < 120°C or curable with actinic radiation and thermally at a temperature < 120°C to the surfacer film (1.1) or the surfacer coat (1.2), and
2.1 drying the resultant wet film without completely curing it, to give a basecoat film, or
2.2 curing the resultant wet film alone or together with the surfacer film (1.1) thermally at a temperature < 120°C or with actinic radiation and thermally at a temperature < 120°C, to give a color and/or effect basecoat,
3. applying at least one multicomponent clearcoat material curable with actinic radiation and thermally at a temperature of < 120°C to the basecoat film (2.1) or the basecoat (2.2), and curing the resultant wet film
3.1 alone,
3.2 together with the basecoat film (2.1) or
3.3 together with the basecoat film (2.1) and the surfacer film (1.1)
with actinic radiation and thermally at a temperature < 120°C, to give the multicoat system, **characterized in that** the multicomponent clearcoat materials curable thermally and with actinic radiation comprise at least
(A) one component comprising
(A1) at least one constituent containing at least two isocyanate-reactive functional groups and
(A2) at least one constituent containing at least one functional group which contains at least one bond which can be activated with actinic radiation,
and
(B) one component comprising
(B2) at least one compound containing at least one isocyanate group and at least one functional group which contains at least one bond which can be activated with actinic radiation.

2. Multicoat system according to Claim 1, **characterized in that** actinic radiation used comprises electromagnetic radiation and/or corpuscular radiation.

3. Multicoat system according to Claim 2, **characterized in that** electromagnetic radiation used comprises near infrared, visible light, UV radiation or X-rays and corpuscular radiation used comprises electron beams.

4. Multicoat system according to any of Claims 1 to 3, **characterized in that** the thermal curing is conducted at a temperature < 110°C.

5. Multicoat system according to any of Claims 1 to 4, **characterized in that** surfacers used comprise
- thermally curable surfacers based on aqueous polyurethane dispersions,
- thermally curable multicomponent surfacers, or
- surfacers curable thermally and with actinic radiation.

6. Multicoat system according to any of Claims 1 to 5, **characterized in that** basecoat materials used comprise aqueous basecoat materials based on aqueous polyurethane dispersions and/or polyacrylate dispersions.

7. Multicoat system according to Claim 1, **characterized in that** bonds used which can be activated with actinic radiation comprise carbon-hydrogen single bonds or carbon-carbon, carbon-oxygen, carbon-nitrogen, carbon-phosphorus or carbon-silicon single bonds or double bonds.

8. Multicoat system according to Claim 7, **characterized in that** carbon-carbon double bonds ("double bonds") are used.

9. Multicoat system according to Claim 8, **characterized in that** the double bonds are present in the form of (meth)acrylate, ethacrylate, crotonate, cinnamate, vinyl ether, vinyl ester, ethenylarylene, dicyclopentadienyl, norbornenyl, isoprenyl, isopropenyl, allyl or butenyl groups; ethenylarylene ether, dicyclopentadienyl ether, norbornenyl ether, isoprenyl ether, isopropenyl ether, allyl ether or butenyl ether groups; or ethenylarylene ester, dicyclopentadienyl ester, norbornenyl ester, isoprenyl ester, isopropenyl ester, allyl ester or butenyl ester groups.

10. Multicoat system according to any of Claims 1 to 9, **characterized in that** the isocyanate-reactive functional groups comprise thiol, primary or secondary amino, imino or hydroxyl groups.

11. Multicoat system according to any of Claims 1 to 10, **characterized in that** the multicomponent clearcoat material curable with actinic radiation and thermally at a temperature of < 120°C comprises nanoparticles.

12. Process for producing a multicoat color and/or effect coating system with the quality of an automotive OEM coating system as set forth in any of Claims 1 to 11 by application of at least one surfacer coat, at least one basecoat and at least one clearcoat to a primed or unprimed substrate and curing of the resultant wet films, **characterized in that**
1. at least one surfacer curable thermally at a temperature < 120°C or curable with actinic radiation and thermally at a temperature < 120°C is applied to a primed or unprimed substrate and
1.1 the resultant wet film is dried without completely curing it, to give a surfacer film, or
1.2 the resultant wet film is cured thermally at a temperature < 120°C or with actinic radiation and thermally at a temperature < 120°C, to give a surfacer coat,
2. at least one basecoat material curable thermally at a temperature < 120°C or curable with actinic radiation and thermally at a temperature < 120°C is applied to the surfacer film (1.1) or the surfacer coat (1.2), and
2.1 the resultant wet film is dried without completely curing it, to give a basecoat film, or
2.2 the resultant wet film is cured alone or together with the surfacer film (1.1) thermally at a temperature < 120°C or with actinic radiation and thermally at a temperature < 120°C, to give a color and/or effect basecoat,
3. at least one multicomponent clearcoat material curable with actinic radiation and thermally at a temperature of < 120°C is applied to the basecoat film (2.1) or the basecoat (2.2), and the resultant wet film is cured
3.1 alone,
3.2 together with the basecoat film (2.1) or
3.3 together with the basecoat film (2.1) and the surfacer film (1.1)
with actinic radiation and thermally at a temperature < 120°C, to give the clearcoat, the clearcoat and the basecoat, or the clearcoat, the basecoat and the surfacer coat, **characterized in that** the multicomponent clearcoat materials curable thermally and with actinic radiation comprise at least
(A) one component comprising
(A1) at least one constituent containing at least two isocyanate-reactive functional groups and
(A2) at least one constituent containing at least one functional group which contains at least one bond which can be activated with actinic radiation,
and
(B) one component comprising
(B2) at least one compound containing at least one isocyanate group and at least one functional group which contains at least one bond which can be activated with actinic radiation.

13. Use of the multicoat systems according to any of Claims 1 to 11 or of a multicoat system produced according to Claim 12 for automotive OEM finishing, automotive refinish, the coating of furniture, doors, windows or the interior and exterior of constructions, or for industrial coating, including coil coating, container coating, and the coating or impregnation of electrical components.

## Revendications

1. Vernis multicouche donnant une couleur et/ou un effet, ayant la qualité d'un vernis industriel pour automobiles, qui peut être fabriqué en procédant de la manière suivants :
1. on applique au moins une charge durcissable thermiquement à une température < 120°C ou thermiquement à une température < 120°C et par exposition à un rayonnement actinique sur un substrat avec ou sans couche de fond et la couche humide obtenue
1.1 est séchée sans complètement la durcir pour obtenir une couche de charge ou
1.2 est durcie thermiquement à une température < 120°C ou thermiquement à une température < 120°C et par exposition à un rayonnement actinique pour obtenir un vernis de charge,
2. on applique au moins un vernis de base durcissable thermiquement à une température < 120°C ou thermiquement à une température < 120°C et par exposition à un rayonnement actinique sur la couche de charge (1.1) ou le vernis de charge (1.2) et la couche humide obtenue
2.1 est séchée sans complètement la durcir pour obtenir une couche de vernis de base ou
2.2 est durcie seule ou conjointement avec la couche de charge (1.1), thermiquement à une température < 120°C ou thermiquement à une température < 120°C et par exposition à un rayonnement actinique pour obtenir un vernis de base donnant une couleur et/ou un effet,
3. on applique au moins un vernis transparent à plusieurs composants durcissable par exposition à un rayonnement actinique ainsi que thermiquement à une température < 120°C sur la couche de vernis de base (2.1) ou le vernis de base (2.2) et l'on durcit la couche humide obtenue
3.1 seule,
3.2 conjointement avec la couche de vernis de base (2.1) ou
3.3 conjointement avec la couche de vernis de base (2.1) et la couche de charge (1.1)
par exposition à un rayonnement actinique ainsi que thermiquement à une température < 120°C pour obtenir le vernis multicouche, **caractérisé en ce que** les vernis transparents à plusieurs composants durcissables thermiquement et par exposition à un rayonnement actinique contiennent au moins
(A) un composant, contenant
(A1) au moins un composant avec au moins deux groupements fonctionnels réactifs aux isocyanates et
(A2) au moins un composant avec au moins un groupement fonctionnel qui contient au moins une liaison activable par rayonnement actinique;
(B) un composant contenant
(B2) au moins un composé avec au moins un groupement isocyanate et au moins un groupement fonctionnel, qui contient au moins une liaison activable par rayonnement actinique.

2. Vernis multicouche selon la revendication 1, **caractérisé en ce que** l'on utilise comme rayonnement actinique un rayonnement électromagnétique et/ou un rayonnement corpusculaire.

3. Vernis multicouche selon la revendication 2, **caractérisé en ce que** l'on utilise, comme rayonnement électromagnétique, le proche infrarouge, la lumière visible, un rayonnement UV ou des rayons X et, comme rayonnement corpusculaire, un rayonnement électronique.

4. Vernis multicouche selon l'une quelconque des revendications 1 à 3, **caractérisé en ce que** l'on effectue le durcissement thermique à une température < 110°C.

5. Vernis multicouche selon l'une quelconque des revendications 1 à 4, **caractérisé en ce que** l'on utilise comme charge
- des charges durcissables thermiquement à base de dispersions aqueuses de polyuréthannes,
- des charges à plusieurs composants durcissables thermiquement ou
- des charges durcissables thermiquement et par exposition à un rayonnement actinique.

6. Vernis multicouche selon l'une quelconque des revendications 1 à 5, **caractérisé en ce que** l'on utilise, comme vernis de base, du vernis de base aqueux à base de dispersions aqueuses de polyuréthannes et/ou de dispersions de polyacrylates.

7. Vernis multicouche selon la revendication 1, **caractérisé en ce que** l'on utilise, comme liaisons activables par rayonnement actinique, des liaisons simples carbone-hydrogène ou des liaisons simples ou des liaisons doubles carbone-carbone, carbone-oxygène, carbone-azote, carbone-phosphore ou carbone-silicium.

8. Vernis multicouche selon la revendication 7, **caractérisé en ce que** l'on utilise des liaisons doubles carbone-carbone (« liaisons doubles »).

9. Vernis multicouche selon la revendication 8, **caractérisé en ce que** les liaisons doubles se présentent sous la forme de groupements (méth)acrylate, éthacrylate, crotonate, cinnamate, vinyléther, vinylester, éthénylarylène, dicyclopentadiényle, norbornényle, isoprényle, isopropényle, allyle ou butényle; des groupements éther d'éthénylarylène, de dicyclopentadiényle, de norbornényle, d'isoprényle, d'isopropényle, d'allyle ou de butényle ou des groupements ester d'éthénylarylène, de dicyclopentadiényle, de norbornényle, d'isoprényle, d'isopropényle, d'allyle ou de butényle.

10. Vernis multicouche selon l'une quelconque des revendications 1 à 9, **caractérisé en ce que** les groupements fonctionnels réactifs aux isocyanates sont des groupements thiol, des groupements amino, imino ou hydroxyle primaires ou secondaires.

11. Vernis multicouche selon l'une quelconque des revendications 1 à 10, **caractérisé en ce que** le vernis transparent à plusieurs composants durcissable par exposition à un rayonnement actinique ainsi que thermiquement à une température < 120°C contient des nanoparticules.

12. Procédé de fabrication d'un vernis multicouche donnant une couleur et/ou un effet et ayant la qualité d'un vernis industriel pour automobiles selon l'une quelconque des revendications 1 à 11, par application d'au moins un vernis de charge, d'au moins un vernis de base et d'au moins un vernis transparent sur un substrat avec ou sans couche de fond et durcissement des couches humides obtenues, **caractérisé en ce que**
1. l'on applique au moins une charge durcissable thermiquement à une température < 120°C ou thermiquement à une température < 120°C et par exposition à un rayonnement actinique sur un substrat avec ou sans couche de fond et la couche humide obtenue
1.1 est séchée sans complètement la durcir pour obtenir une couche de charge ou
1.2 est durcie thermiquement à une température < 120°C ou thermiquement à une température < 120°C et par exposition à un rayonnement actinique pour obtenir un vernis de charge,
2. l'on applique au moins un vernis de base durcissable thermiquement à une température < 120°C ou thermiquement à une température < 120°C et par exposition à un rayonnement actinique sur la couche de charge (1.1) ou le vernis de charge (1.2) et la couche humide obtenue,
2.1 est séchée sans complètement la durcir pour obtenir une couche de vernis de base ou
2.2 est durcie seule ou conjointement avec la couche de charge (1.1) thermiquement à une température < 120°C ou thermiquement à une température < 120°C et par exposition à un rayonnement actinique pour obtenir un vernis de base donnant une couleur et/ou un effet,
3. l'on applique au moins un vernis transparent à plusieurs composants durcissable par exposition à un rayonnement actinique et thermiquement à une température < 120°C sur la couche de vernis de base (2.1) ou le vernis de base (2.2) et l'on durcit la couche humide obtenue
3.1 seule,
3.2 conjointement avec la couche de vernis de base (2.1) ou
3.3 conjointement avec la couche de vernis de base (2.1) et la couche de charge (1.1)
par exposition à un rayonnement actinique et thermiquement à une température < 120°C pour obtenir le vernis transparent, le vernis transparent et le vernis de base ou le vernis transparent, le vernis de base et le vernis de charge, **caractérisé en ce que** les vernis transparents à plusieurs composants durcissables thermiquement et par exposition à un rayonnement actinique contiennent au moins
(A) un composant, contenant
(A1) au moins un composant avec au moins deux groupements fonctionnels réactifs aux isocyanates et
(A2) au moins un composant avec au moins un groupement fonctionnel qui contient au moins une liaison activable par rayonnement actinique;
(B) un composant contenant
(B2) au moins un composé avec au moins un groupement isocyanate et au moins un groupement fonctionnel, qui contient au moins une liaison activable par rayonnement actinique.

13. Utilisation des vernis multicouche selon l'une quelconque des revendications 1 à 11 ou d'un vernis multicouche fabriqué selon la revendication 12 pour le premier vernis automobile, le vernis de réparation automobile, le vernis de meubles, de portes, de fenêtres ou d'ouvrages à l'intérieur et à l'extérieur, pour le vernis industriel, y compris le prélaquage en continu, le revêtement de conteneurs et les revêtements ou l'imprégnation de composants électrotechniques.
